# EUROPEAN PATENT SPECIFICATION

(11) **EP 3 599 755 B1**
(45) Date of publication and mention of the grant of the patent: **15.09.2021**
(21) Application number: 19191515.6
(22) Date of filing: 29.11.2016
(51) Int. Cl.: H04L 29/08, H04L 12/28, H04M 1/725, H04W 76/14, H04W 88/04, H04W 84/18, H04W 4/00, H04W 76/23, H04N 21/436

(54) **METHOD FOR DEVICE-TO-DEVICE COMMUNICATION BETWEEN A LOCAL DEVICE AND A REMOTE DEVICE**
VERFAHREN ZUR VORRICHTUNG-ZU-VORRICHTUNG-KOMMUNIKATION ZWISCHEN EINER LOKALEN VORRICHTUNG UND EINER ENTFERNTEN VORRICHTUNG
PROCÉDÉ DE COMMUNICATION DE DISPOSITIF À DISPOSITIF ENTRE UN APPAREIL LOCAL ET UN AUTRE DISTANT

(30) Priority: 30.11.2015 EP 15197013
(43) Date of publication of application: 29.01.2020
(62) Divisional of application: 16805055.7
(73) Proprietor: Koninklijke KPN N.V., 3072 AP Rotterdam (NL); Nederlandse Organisatie voor toegepast- natuurwetenschappelijk Onderzoek TNO, 2595 DA 's-Gravenhage (NL)
(72) Inventor: SCHENK, Michael, 2513 BZ The Hague (NL); de Kievit, Sander, Tokyo, 108-8001 (JP); Almodóvar Chico, José, 2513 TD The Hague (NL); NORP, Antonius, 2584 EN The Hague (NL)
(74) Representative: Wuyts, Koenraad Maria

(56) References cited:
- WO-A1-2010/127365
- WO-A1-2014/187601
- WO-A2-2011/053008
- US-A1- 2012 265 913
- US-A1- 2014 195 654
- US-A1- 2015 054 947
- US-A1- 2016 165 663
- "3rd Generation Partnership Project; Technical Specification Group Services and System Aspects; Study on architecture enhancements to support Proximity-based Services (ProSe) (Release 12)", 3GPP TR 23.703, vol. SA WG2, no. V1.1.0, 28 January 2014 (2014-01-28), pages 1-324, XP050729424,
- "3rd Generation Partnership Project; Technical Specification Group Services and System Aspects; Architecture enhancements for non-3GPP accesses (Release 13)", 3GPP TS 23.402, vol. SA WG2, no. V13.3.0, 17 September 2015 (2015-09-17), pages 1-298, XP050996016,

## Description

### FIELD OF THE INVENTION

The invention relates to methods for communicating between at least one local device connected to a local network and a user equipment connected to a public network. The invention further relates to an intermediary device and a user equipment for use in the methods.

### BACKGROUND

The amount of devices that is able to connect to the Internet of Things is expected to grow enormously. It is estimated that by the year 2020 50 billion devices will be connected. Therefore, it is no surprise that industry efforts and investments are directed towards this field. The new generation of mobile systems, 5G, is expected to bring new network and services capabilities. One aspect of the new capabilities relates to device-to-device (D2D) communication.

Methods are known from WO2014/187601 for device to device discovery that comprise receiving a service request from a service availing device seeking to avail at least one service, wherein the service request indicates the at least one service. The method further comprises providing a link message to the service availing device and at least one service offering device associated with the at least one service, based on the service request, for initiating device discovery to establish a D2D link for availing the at least one service.

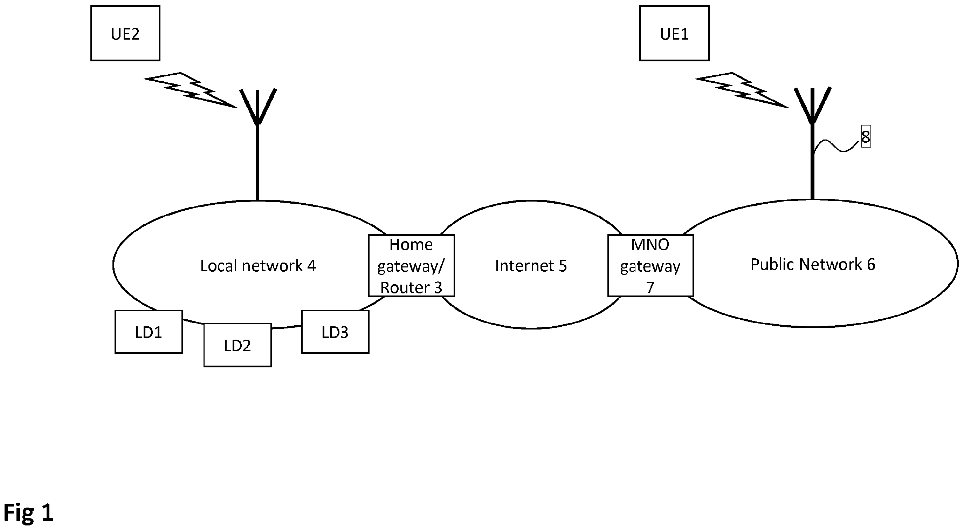

FIG. 1 shows a typical situation wherein three local devices (LD1, LD2, LD3) are connected to the local network 4. The local network 4 provides Internet connectivity via the home gateway/router 3. User equipment UE2 is connected to the same local network via a radio interface, e.g. Wi-Fi. User equipment UE1 is connected via a radio interface to the public network 6 (using 2G/3G/4G and in the future 5G or further generation radio systems).

UE2 has access to local services offered by the three local devices LD1, LD2 and LD3 when connected to the local network. UE2, however, cannot access any data services provided by a mobile operator in the public network 6, because these services are currently not accessible over the internet 5.

Since UE1 is connected to the public network 6, it has access to the data services provided by a mobile network operator (MNO), irrespective of the location of UE1, as long as the location is covered by the public network 6. UE1 also has Internet connectivity via the public network 6. UE1, however, cannot easily access any of the local services provided by local devices LD1-LD3. Ways to access local devices from a public network do exist. One way to access the devices would be through a so-called cloud service, where the local device connects to the cloud-service and the user equipment connects to the same cloud-service. A drawback is that for each local device, another cloud service is used and that the user equipment has to keep many connections. Yet another way to access local devices is by giving all local devices a public addressable IP address. However, a drawback of that scenario is that all devices are directly exposed to the Internet with each device having to manage its own security. Yet another way is to install and configure a so-called Virtual Private Network (VPN). VPNs are for example used to provide access to local resources on a corporate network for employees that are on the road. VPNs are typically not meant for users accessing their local network at home. Drawbacks to the end users are the difficulty of configuring a VPN for home use, the battery drain for the user equipment, the relatively large overhead and the related decreased user experience. All of these problems might be overcome by a tech savvy user that would like to access devices in a single local network, however, even an experienced user will struggle to configure equipment to set up two VPNs, e.g. one for the home and one for the office in order to access devices from both networks almost simultaneously.

UE1 and UE2 may actually be the same user equipment, depending on whether or not its owner has switched on and configured a local network interface.

As a result of the situation depicted in FIG. 1 the user is faced with a number of drawbacks. A first drawback is that a user has to specifically switch on a local network interface (e.g. Wi-Fi) in order to be able to use services provided by local devices LD1 - LD3. This is a drawback as the user may prefer not to use WiFi but the public network for internet access and for his other services. When the user has to switch on WiFi this has a negative effect on battery standby time of the UE. Furthermore, most UEs are configured to use WiFi for all services when WiFi is switched on, which may not be what the user prefers. Another drawback is that a user will not have access to local devices when moving away from the local network 2 as explained above. Hence, it is not possible to easily use services provided by the local devices LD1 - LD3 when away from the local network 2.

WO 2011/053008 A2 provides a method for controlling a home network system using a mobile terminal, which includes the mobile terminal connecting to a gateway of a home network through a communication network, the mobile terminal receiving a list of devices which are connected to the home network from the gateway of the home network, the mobile terminal displaying the devices connected to the home network, if one of the displayed devices is selected, requesting the status information of the selected device from the selected device status information of the selected device through the gateway, receiving the status information of the selected device from the selected device, and displaying the received status information and a user interface for controlling the selected device.

### SUMMARY

It is an object of the invention to enable a user equipment to access a local device connected to a local network, even if the user equipment is not connected directly to the local network, but is connected to a public network.

Therefore, one aspect of the invention relates to a method for communicating between at least one local device connected to a local network and a user equipment connected to a public network, via an intermediary device that is configured to connect to the local network and to the public network. The method comprises the steps in the intermediary device of connecting to the local net work and storing a device identifier of the at least one local device in the local network. The method further comprises connecting to the public network and transmitting profile information for the user equipment enabling the user equipment to present a virtual representation of the local device in the local network. The profile information comprises the device identifier.

Another aspect of the invention, relates to an intermediary device for communicating between at least one local device connected to a local network and a user equipment connected to a public network, via the intermediary device. The intermediary device comprises a local network interface configured to connect to the local network and a public network interface configured to connect to the public network. The intermediary device further comprises storage means configured to store a device identifier, received over the local network interface, of the at least one local device in the local network. The device also comprises processing means configured for preparing profile information for transmission for the user equipment enabling the user equipment to present a virtual representation of the local device in the local network, the profile information comprising the device identifier.

The applicants have recognized that problems arise when a user wishes to communicate with devices connected to a local network, for example a local area network at home, using a user equipment connected to a public network, for example with his mobile telephone or other device when the user is away from home. Although almost every electronic device comes with a network interface, either wired or wireless, to attach to a local network, and although Universal Plug and Play (UPnP) makes it possible for devices to broadcast their services over a local network and let other devices discover and access these services, such communication only works when both the broadcasting and discovering devices are attached to the same local network. The latter may be the result of the common configuration of home gateways. Home gateways are commonly configured to prevent UPnP broadcasts crossing the boundary of local and external network, because allowing UPnP to cross these boundaries may pose a security threat by exposing the local network to the outside world and may likely flush networks with mostly useless broadcast traffic.

The disclosed method and device overcome this drawback by introducing an intermediary device that is configured to both connect to the local network and to the public network. The intermediary device is enabled to transmit profile information for the user equipment over the public network enabling the user equipment in the public network to present a virtual representation of the local device in the local network. The virtual representation of the local device on the user equipment enables the user to see (and possibly control) the local device as if the user is connected to the local network.

The local network may comprise a local area network comprising wired Ethernet connections and/or wireless connections with devices, for example over WIFI, Bluetooth or ZigBee. Access to the local network is typically restricted by the owner of the network. The assumption in current solutions is that the owner of devices that are connected to the local network is either the same person as the local network owner or has an established relationship (e.g. member of same household or employer/employee).

The public network may comprise a network of a Mobile Network Operator (MNO). Connecting to the public network may comprise connecting to a(n) (e)NodeB or another type of base station. A base station may use any suitable wireless technology, such as WiFi, or light based communication technology (e.g. LED based) that is presently being developed and commercialized, or any wired technology, to connect to user equipment and/or the intermediary device. Connecting to the public network may also comprise using the 3GPP Generic Bootstrapping Architecture (GBA) or other 3GPP standardized technologies (ref 3GPP TS 23.402) that allow the use of other radio technologies, such as WiFi. These technologies may comprise connecting via a secure tunnel to the public network using any kind of radio technology or wired technology. To the public network, the intermediary device may behave as if connected using the regular 3G/4G/5G radio network.

The intermediary device may be configured to set up a secure connection with the user equipment. The secure connection may be an encrypted tunnel. The profile information may be transmitted over the secure connection between the intermediary device and the user equipment in the public network. Alternatively, the intermediary device may be directly addressable over the public network by its IP address. Another way to connect the intermediary device with the user equipment may be to set up an IP connection as per EP14195052.7. Yet another way to send information between the user equipment and the intermediary device is to make use of a service provided by the public network that will route information between the user equipment and intermediary device based on the fact that both the user equipment and the intermediary device are known in the public network (similar to how a femtocell and a user equipment can be known to the public network) and on the fact that the network can route traffic between any two endpoints known to the public network.

It should be appreciated that the virtual representation on the user equipment may be presented to a user of the user equipment and/or to an application running on the user equipment and may be such that to the user and/or to the application, the user equipment appears to be directly connected to the local network. The virtual representation may be obtained by an application installed and executed on the user equipment. The virtual representation may also be obtained by creating a network overlay in the public network specific to that UE.

The device identifier may be stored in storage means of the intermediary device. The device identifier in the profile information may be translated in order to make the device identifier globally unique.

The intermediary device may have a formal identity in the public network. The intermediary device may e.g. comprise an International Mobile Equipment Identity (IMEI), an International Mobile Subscriber Identity (IMSI) or an MSISDN. The intermediary device may comprise a Subscriber Identity Module, (SIM), UMTS Subscriber Identity Module (USIM) or IMS Subscriber Identity Module (ISIM). The intermediary device may also comprise a secure storage space for identity credentials, such as the Universal Integrated Circuit Card (UICC). The public network interface may comprise a 3G/4G/5G radio interface.

It should be appreciated that the profile information may be transmitted to the user equipment via the public network.

It should be appreciated that the profile information may be transmitted to a registry in the public network. The registry may cache the profile information and may transmit the profile information to the user equipment.

In an embodiment, the method comprises receiving a state of the at least one local device over the local network and transmitting the state over the public network for the user equipment.

It should be appreciated that the state may relate to any parameter associated with the local device. The state may for example relate to a connection state of the local device indicating a state of the connection with the local network, or to an operational state, such as "on" or "off', or to an aspect that is specific to the local device, such as the temperature of a refrigerator or the volume of a sound system, or a state of a sensor device of a security system, e.g. "motion detected" or "door opened".

The state may be transmitted to the user equipment via a registry in the public network that caches the state.

It should be appreciated that the virtual representation may also comprise the state.

The state may be stored in storage means of the intermediary device; and may be stored (and, possibly updated) such that it is associated with the device identifier.

The embodiment is advantageous, because it enables device specific information to be shown to a user controlling the user equipment. An example would be that a user can monitor the temperature of his refrigerator at home even when the user equipment is not connected to the local network.

In another embodiment the method comprises comparing the received state with a reference state and transmitting the state over the public network for the user equipment based on the comparison between the state and the reference state. The embodiment may further comprise storing the reference state. The reference state may comprise a state of the local device that was previously received over the local network. The state may comprise a value of a parameter and the reference state may comprise a reference value of that parameter. Comparing the state and the reference state may comprise comparing the value with the reference value, such as comparing the received temperature of a refrigerator with a reference temperature. The comparison of the value with the reference value may comprise any mathematical operation involving these two values, such as a subtraction. The outcome of the comparison may be checked against a condition. It may be that if the condition is satisfied, the state is transmitted over the public network for the user equipment. In the above example the state of the refrigerator may be transmitted over the public network for the user equipment if the temperature is above a reference temperature. In another example it may be that the state is transmitted if the difference between two subsequently received temperatures is more than 1.0 degree Celsius. This embodiment enables that states are selectively transmitted, e.g. only when they are relevant, over the public network, hereby offloading the public network.

In another embodiment, the method comprises storing, in the intermediary device, an address of the at least one local device in the local network. The method further comprises receiving, by the intermediary device, via the public network from the user equipment a control signal for the at least one device associated with the device identifier and transmitting the control signal via the local network to the address of the local device associated with the device identifier.

The address associated with the local device may comprise an IP-address or another local address, such as a MAC-address, of the local device in the local network. It should be appreciated that the address may also comprise the device identifier. It may be that the address is used as the device identifier, i.e. the device identifier and the address are one and the same entity. The address may be stored in storage means of the intermediary device, and may be stored such that it is associated with the device identifier. The control signal may comprise the device identifier. This embodiment may also comprise resolving the received device identifier to the address in the intermediary device.

The control signal may be received over a connection between the intermediary device and the user equipment. The connection may be a secure connection or may comprise an IP connection as per EP14195052.7 or may be facilitated by the mobile network operator, meaning that the intermediary device and the user equipment are known to the public network and that the public network will route the traffic from one to another as a service. The transmitted profile information may comprise an identifier and/or an address of the intermediary device that enables the user equipment to route the control signal to the intermediary device. The control signal may be sent using a protocol supported by the local device. The received control signal may be transmitted transparently from the user equipment via the intermediary device to the local device. It should be appreciated that the control signal may be received indirectly from the user equipment, for example via a D2D registry in the public network.

The embodiment enables that a user may actually control a device in the local network, for example a device in his home, while the user is not connected to the local network, but is connected to the public network. An example would be one wherein the user may switch on his home security system when away from home.

In another embodiment, at least one of the device identifier, the address of the device in the local network and the state of the local device is obtained by the intermediary device by at least one of:
- capturing an announcement, broadcast by the at least one local device over the local network; and
- transmitting a probe signal over the local network and receiving a signal in response to the probe signal from the at least one device.

The announcement may comprise a Universal Plug and Play (UPnP) message. The announcement may also comprise a Multicast DNS and its answer.

The probe signal may comprise a UPnP message that is broadcast over the local network. The probe signal may be identical to a probe signal typically sent by the user equipment. This may be achieved by capturing a probe signal sent by the user equipment, storing the probe signal and transmitting the stored probe signal over the local network. An advantage of sending a probe signal that is typically sent by the user equipment is that it may trigger local devices that are configured to only respond to probe signals specifically from the user equipment.

The embodiment enables flexibility in how device identifiers, addresses and state of the local devices in the local network are obtained.

In another embodiment, the method comprises repeatedly receiving states of the at least one local device over the local network. It may be that the state of the local device changes with time. Updating may comprise overwriting a previously obtained state with a more recently obtained state associated with the local device. Updating may comprise overwriting data stored in storage means of the intermediary device. The embodiment enables that changes in the status of local devices are registered in the intermediary device in order to transmit updates to the user equipment connected to the public network. The virtual representation in the user equipment may include the updated state.

In another embodiment, the method comprises respectively transmitting received states of the at least one local device over the public network for the user equipment. The embodiment enables that the user equipment comprises an up-to-date state, and hence that the virtual representation comprises an up-to-date state.

In another embodiment, the method comprises updating the profile information comprising obtaining a new device identifier of a new local device. It may be that a new local device different from the first local device is connected to the local network. It may also be that the local device comprises the new local device, for example as a result of a software update in the local device, the software update defining the new local device within the physical local device, wherein the new local device may offer a new service in the local network. Updating the profile information may further comprise adding the new device identifier of the new local device to the profile information. In addition to the device identifier of this new local device, also the address and state associated with the new local device may be obtained. The embodiment enables that the profile information always comprises all local devices connected to the local network, including newly connected local devices.

In another embodiment, the method comprises repeatedly transmitting the updated profile information for the user equipment over the public network. The virtual representation may be updated based on the updated profile information. The embodiment enables that a user may be presented virtual representations of newly connected local devices or virtual representations of local devices comprising an up-to-date state. If for example, a new local device is connected to the local network, this can be reflected in the virtual representation at the user equipment. Another example would be one wherein the temperature of a refrigerator would suddenly rise, which can be reflected in an updated virtual representation.

In one embodiment, the method comprises storing a list comprising a plurality of user equipments, the plurality comprising the user equipment, and transmitting profile information for the plurality of user equipments enabling the plurality of user equipments to present respective virtual representations of the local device in the local network. This embodiment allows more than one user equipment to be used to communicate with local devices in a local network.

In one embodiment, the intermediary device is further configured to receive a state of the at least one local device over the local network, and to transmit the state over the public network to the user equipment.

In one embodiment, the intermediary device is further configured to compare the received state with a reference state and to transmit the state over the public network for the user equipment based on the comparison between the state and the reference state.

In one embodiment, the intermediary device further comprises storage means configured to store an address of the at least one local device in the local network. The intermediary device further comprises processing means configured to process a control signal received via the public network interface from the user equipment for the at least one local device associated with the device identifier. The processing means is further configured to transmit the control signal, or a derivative thereof, via the local network interface to the address of the local device associated with the device identifier.

In one embodiment, the intermediary device is further configured to obtain at least one of the device identifier, the address and the state by at least one of:
- capturing an announcement, broadcast by the at least one local device over the local network; and
- sending a probe signal over the local network and receiving a signal in response to the probe signal from the at least one device.

In one embodiment, the intermediary device is further configured to repeatedly receive states of the at least one local device over the local network.

In one embodiment the intermediary device is configured to respectively transmit received states over the public network for the user equipment.

In one embodiment, the intermediary device is further configured to update the profile information by obtaining a device identifier of a new local device.

In one embodiment, the processing means are further configured to repeatedly transmit the updated profile information for the user equipment.

In one embodiment, the storage means are further configured to store a list comprising a plurality of user equipments and the processing means are further configured to transmit profile information for the plurality of user equipments enabling the plurality of user equipments to present respective virtual representations of the local device in the local network.

Another aspect of the invention relates to a method for communicating between at least one local device connected to a local network and a user equipment connected to a public network, via an intermediary device connected to the local network and to the public network. The method comprises the steps in the user equipment of receiving profile information from the intermediary device over the public network, the profile information comprising a device identifier of the at least one local device in the local network. The method further comprises presenting a virtual representation of the local device in the local network on the basis of the profile information.

In one embodiment, the method further comprises receiving over the public network a state indicating a status of the at least one local device.

In one embodiment, the method further comprises transmitting via the public network to the intermediary device a control signal by an interaction with the presented virtual representation of the local device, for the at least one device associated with the device identifier. The interaction with the presented virtual representation may be a user interaction. The interaction may also be between the virtual representation and an application running on the user equipment.

In one embodiment the method comprises repeatedly receiving states of the at least one local device over the public network from the intermediary device.

In one embodiment the method further comprises repeatedly receiving updated profile information over the public network from the intermediary device.

Another aspect of the invention relates to a user equipment for communicating between at least one local device connected to a local network and the user equipment connected to a public network, via an intermediary device connected to the local network and to the public network. The user equipment comprises a processor configured to receive profile information from the intermediary device, the profile information comprising a device identifier of the at least one local device in the local network. The processor is also configured to present a virtual representation of the local device in the local network on the basis of the profile information.

In one embodiment, the processor is further configured to receive a state and to indicate a state of the at least one local device in the virtual representation based on the received state.

In one embodiment, the user equipment further comprises interaction means configured to enable interaction with the virtual representation of the local device in the local network by transmitting via the public network to the intermediary device a control signal for the at least one device associated with the device identifier. The interaction means may comprise processing means that enable the interaction between the virtual representation and an application running on the user equipment. The interaction means may also comprise means that enable a user to interact with the virtual representation, such as a an application installed on the phone that shows the virtual representation on a touch screen.

In one embodiment, the user equipment is further configured to receive further profile information over the public network from a further intermediary device connected to a further local network and to the public network, the further profile information comprising a further device identifier of at least one further local device connected to the further local network, and configured to present a further virtual representation of the further local device on the basis of the further profile information, wherein the virtual representation and the further virtual representation are presented as members of one group. Advantageously, the user can see virtual representations of local devices in different networks, e.g. in his home network and in his company network, or his home network and the local network of a friend, in one group, i.e. in one overview.

In one embodiment the processor is further configured to repeatedly receive states of the at least one local device over the public network from the intermediary device.

In one embodiment, the user equipment is further configured to repeatedly receive updated profile information over the public network from the intermediary device.

Another aspect of the invention relates to a method for communicating between a first local device connected to a first local network and a user equipment connected to a public network, via a first intermediary device connected to the first local network and to the public network, and between a second local device connected to a second local network and the user equipment, via a second intermediary device connected to the second local network and to the public network; the method comprising the steps in the user equipment of:
- receiving first profile information from the first intermediary device over the public network, the first profile information comprising a first device identifier of the first local device in the first local network;
- receiving second profile information from the second intermediary device over the public network, the second profile information comprising a second device identifier of the second local device in the second local network;
- presenting a virtual representation of the first and second local devices on the basis of the first and second profile information.

Another aspect of the invention relates to a computer program or suite of computer programs comprising at least one software code portion or a computer program product storing at least one software code portion, the software code portion, when run on a computer system, being configured for executing any of the above-described methods.

### BRIEF DESCRIPTION OF THE FIGURES

FIG. 1 schematically depicts a situation in the state of the art.
FIG. 2 schematically depicts a situation wherein a Femtocell is used.
FIG. 3 - 7 schematically depict embodiments of the invention.
FIG. 8 - 11 are message diagrams between local devices, intermediary device and a user equipment according to embodiments of the invention.
FIG. 12 -13 schematically depict yet other embodiments of the invention.
FIG. 14 schematically depicts an intermediary device according to an embodiment.
FIG. 15 schematically depicts a user equipment according to an embodiment.
FIG. 16 shows an hierarchical software structure in the user equipment according to an embodiment.
FIG. 17 shows a functional decomposition of a user equipment and intermediary device according to an embodiment.
FIG. 18 shows a schematic data processing system according to an embodiment of the invention.

### DETAILED DESCRIPTION OF THE FIGURES

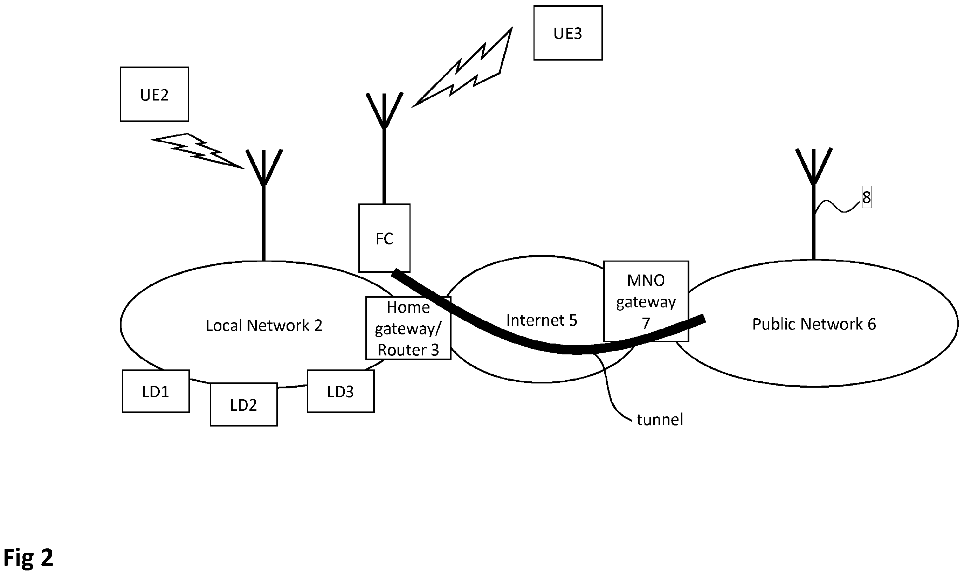

FIG. 2 schematically shows a situation wherein a so-called Femtocell FC is used. Some operators of public networks, such as MNOs, provide Femtocells to their users in order to enhance coverage. A Femtocell provides a public (3G/4G/5G) radio interface. Herein the Femtocell uses a specific (3G/4G/5G) radio signal that is associated with the public network of the operator that provided the Femtocell, usually this operator would be the operator with which a user has a subscription. The Femtocell contacts the public network and sets up a secure tunnel via the home/gateway router 3, the internet 5 and the MNO gateway 7, between the Femtocell and the public network 6. Hence a user equipment UE3 can access the public network 6 via the Femtocell as shown. No connection with an (outside) base station 8 is required. Devices within the local network 2, however, cannot access the Femtocell and also from the internet 5 there is no possibility to access the Femtocell nor the local network 2 via the FC. As a result, irrespective of whether UE3 connects to the public network via a base station 8 (not shown) or via a Femtocell, the result is the same: UE3 is connected to the public mobile network 6 and does not have access to the local network 2 nor to any local devices LD1-LD3 present in the local network 2. Current Femtocells are only useful to increase coverage without forcing the operator to install additional base stations.

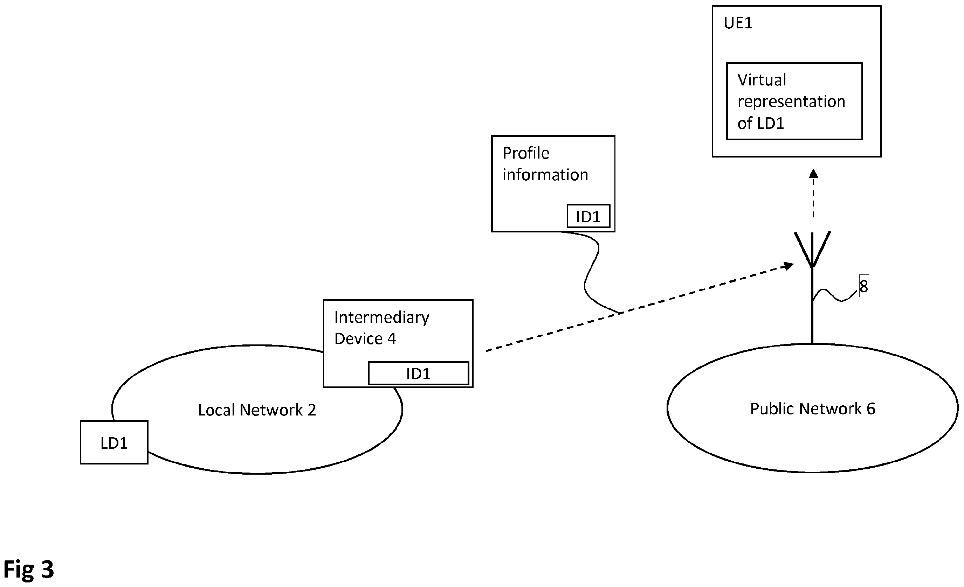

FIG. 3 schematically shows an embodiment of the invention. A local device, LD1, is connected to the local network 2. LD1 may be any device. A great variety of devices is expected to be connected to a local network in the future following development of the Internet-of-Things. In the depicted situation, an intermediary device 4 is connected to the local network 2 and to the public network 6 via base station 8. User equipment UE1 is also connected to the public network via base station 8. It should be appreciated that the intermediary device 4 and the user equipment UE1 may be connected to the public network 6 via different base stations or even via different MNOs. As shown, the intermediary device 4 stores an identifier ID1 that is associated with local device LD1. Preferably the intermediary device 4 obtains this identifier over the local network, but this is not required. Because the intermediary device 4 is connected to the public network 6, the intermediary device 4 may send profile information comprising identifier ID1 via the public network 6 to the user equipment UE1. Once the profile information is received via the public network 6 by the user equipment UE1, the user equipment UE1 may present a virtual representation of LD1 in the local network. The virtual representation may be shown on a display of user equipment UE1, so that a user of the user equipment UE1 is able to see the local device LD1 being present in the local network 2. The presented virtual representation may also not be shown on a display, but be presented to applications running on the user equipment UE1. These applications may perceive that the user equipment UE1 is connected to the local network 2 or connected directly to local device LD1, because of this virtual representation. These applications may connect to and communicate with the virtual representation of the local device LD1.

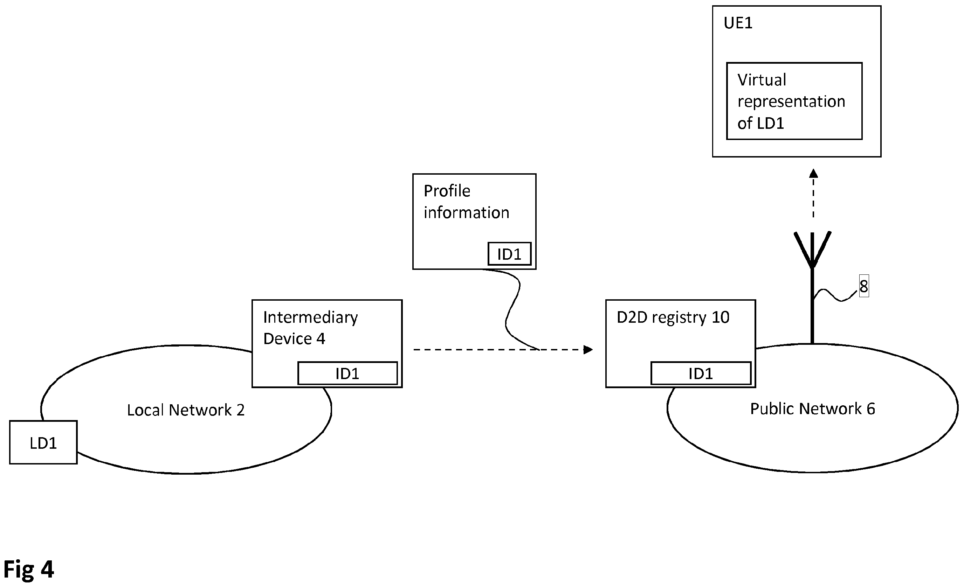

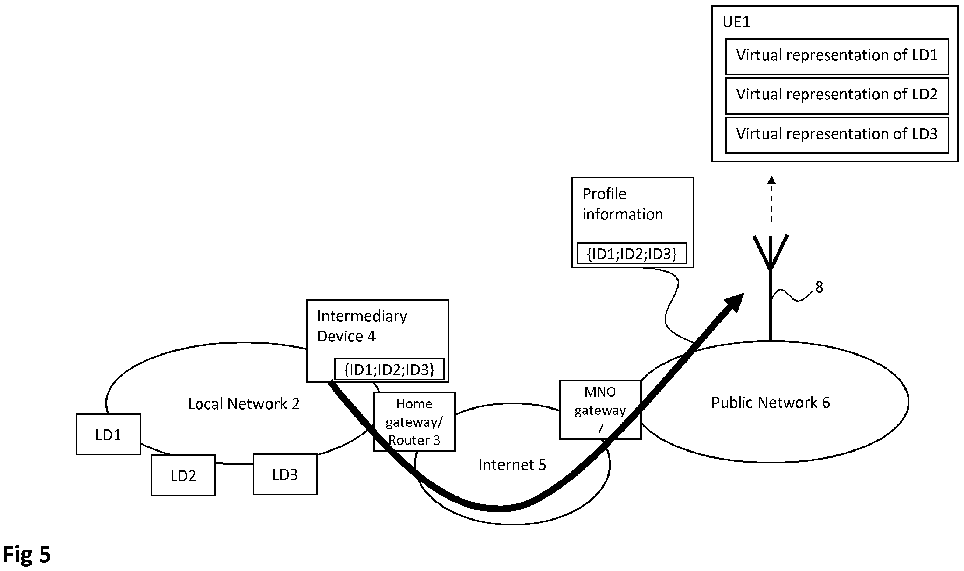

FIG. 4 shows another embodiment of the invention. Herein the profile information is not sent to the user equipment UE1 in one flow. The profile information is first sent to a D2D registry 10 that sits in the public network. It should be appreciated that this profile information may also be transmitted to D2D registry 10 via a base station 8, but of course it may also be sent using other connections between the intermediary device 4 and the public network 6. An example of such another connection is given in the description related to FIG. 5. The D2D registry 10 may cache the profile information and may send the profile information at a later time to the user equipment UE1 via base station 8. The D2D registry 10 may be convenient because it allows the profile information to be transmitted from the intermediary device at any given time, even at times when the user equipment UE1 is not connected to the public network 6 (not shown). The user equipment UE1 may receive the cached profile information at a later time from the D2D registry 10, for example when the user equipment UE1 connects to the public network 6 again after having been disconnected. It should be appreciated that the D2D registry 10 may also generate the virtual representation based on the profile information and the user equipment UE 1 may receive this virtual representation. The user equipment is herewith enabled to present the virtual representation of the local device LD1 in the local network 2, on a display so that a user is able to actually see the virtual representation of LD1, or for example in a programmatic manner to applications running on the user equipment UE1.

FIG. 5 shows another embodiment of the invention. Herein three local devices LD1-LD3 are connected to the local network 2. The local network 2 provides internet connectivity to the intermediary device 4 via a home/gateway router 3. In addition, MNO gateway 7 provides connectivity between the internet 5 and the public network 6. The intermediary device 4 sets up a connection to the public network 6 via the home gateway/router 3, the internet 5 and the MNO gateway 7, similar to the connection that a typical Femtocell sets up as described with reference to FIG. 2. As shown intermediary device stores three device identifiers ID1, ID2 and ID3, respectively associated with LD1, LD2 and LD3. It should be appreciated that the profile information comprises these three identifiers and may be sent over the connection via the public network 6 to user equipment UE1 receiving the profile information from base station 8. It may also be that the profile information is sent over the connection to a D2D registry 10 as described with reference to FIG. 4, in which case the user equipment 10 receives the profile information from the D2D registry. Upon reception of the profile information from base station 8, the user equipment UE1 is enabled to present a virtual representation of each local device LD1, LD2 and LD3.

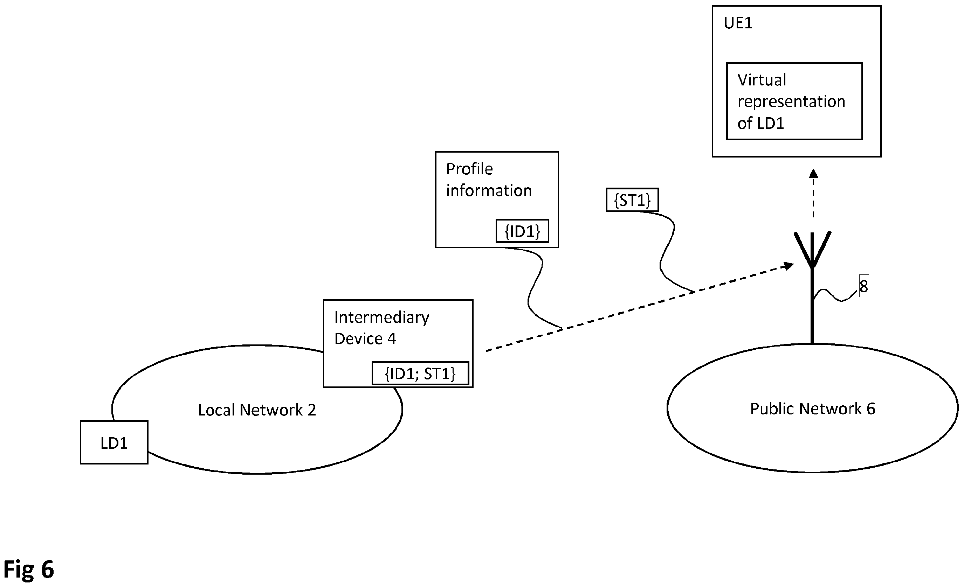

FIG. 6 shows another embodiment of the invention. The depicted situation is similar to the situation depicted in FIG. 3, with the exception that the intermediary device 4 also receives over the local network a state ST1 of the local device LD1. The state ST1 may indicate a current status of local device LD1. Examples of states are the temperature of a refrigerator, whether a lamp is switched on or off, the preprogrammed washing cycle of a washing machine, or a connection status of the local device LD1 to the local network 2. State may also indicate control / service options for the device, e.g. parameters/switches that can be set or controlled. E.g. whether the device has volume control, or whether the hue of a light can be controlled, the intensity of the light can be dimmed, or whether a lamp can only be switched on/off. Note that the control / service options may change over time. For example not all options on a washing machine are operational when it is washing. Another example is that a Smart Television might show as a PVR (in addition to showing as a television) once a hard disk that it can use to record television broadcasts is connected to a USB port. In that sense, the control / service options are part of state. With respect to FIG. 3, not only the profile information is transmitted for the user equipment UE1, but also the state ST1. User equipment UE1 thus receives both the profile information and the state ST1 from the intermediary device 4. Note that the state ST1 is transmitted over the public network 6. It should be appreciated that the connection between the public network 6 and the intermediary device 4 may comprise a connection between intermediary device 4 and a base station 8 as in FIG. 3. This connection may also comprise a connection via the internet 5 as described with reference to FIG. 5. It should also be appreciated that state ST1 may be transmitted from the intermediary device 4 to a D2D registry 10 of FIG. 4 and the user equipment UE1 may receive from the D2D registry 10 the state ST1. The presented virtual representation on the user equipment UE1 may comprise the state ST1. A user may for example monitor the temperature of his refrigerator on a display. Another example would be that an application running on the user equipment UE1, the application being configured to control a sound system, would be aware of which song is currently being played by the sound system. The virtual representation need not be displayed to a user.

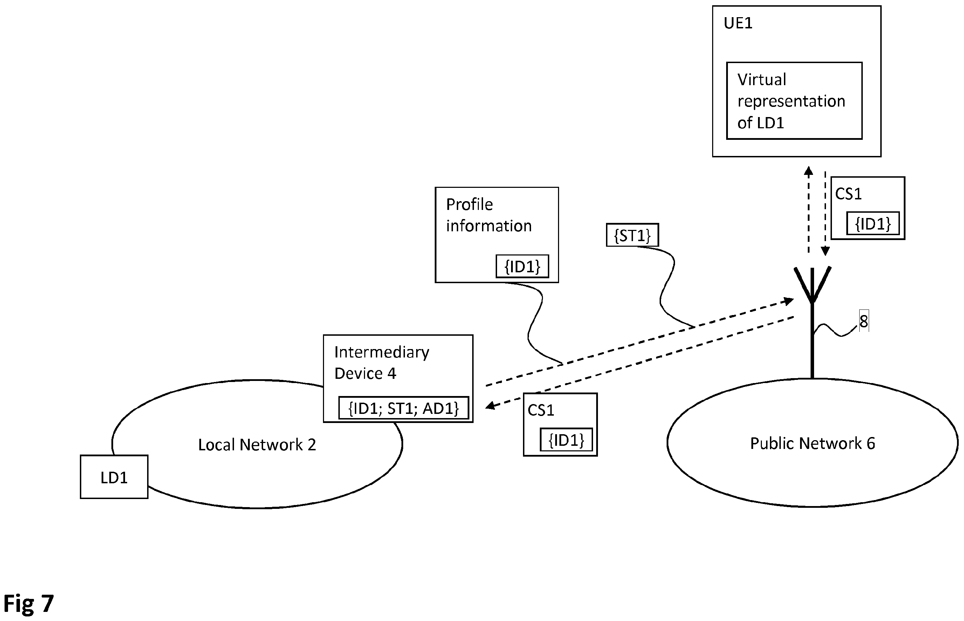

FIG. 7 shows another embodiment of the invention. Herein the intermediary device 4 stores an address AD1 of the local device LD1. This address may be a local address, i.e. an address in the local network 2. Again, as described with reference to FIG. 6, the intermediary device 4 transmits the profile information and the state ST1 for the user equipment 1 over the public network 6 and the user equipment UE1 receives the profile information and state ST1 via the public network. A virtual representation is presented by the user equipment UE1 as shown. In this embodiment the UE1 transmits a control signal CS1 to the intermediary device 4 and intermediary device 4 receives a control signal CS1 from the user equipment UE1 via the public network 6. The control signal may be transmitted by the user equipment UE1 in response to a user interaction at the user equipment UE1. In an example a user wishes to switch on a lamp in his home and therefore interacts with the virtual representation displayed on his user equipment showing the user a (human-understandable) identifier of the lamp and a current state of the lamp, that state in this example being "off'. In response to the user interaction a control signal CS1 is transmitted from the user equipment UE1 to the intermediary device 4.

The control signal may be transmitted by the user equipment UE1 and received at the intermediary device 4 via a base station 8 of the public network 6, or via a connection over the internet 5 as described above. The control signal CS1 comprises the device identifier ID1. Since the intermediary device 4 has stored the address AD1 associated with the device identifier ID1, intermediary device 4 can associate the address AD1 of the local device LD1 to the device identifier ID1 and transmit the control signal to the local device LD1 over the local network 2. In the above example the control signal would be sent from the intermediary device 4 to the lamp in response to which the lamp switches on.

It should be appreciated that the control signal may also comprise the address AD1 of the local device LD1 (not shown). This may be because the intermediary device 4 has transmitted this address AD1 for the user equipment UE1 (not shown) after which the user equipment UE1 has received and stored this address AD1, in addition to the profile information and the state ST1. It may also be that the address AD1 is transmitted and received as the device identifier ID1. It should be noted that the address AD1 is an address in the local network 2 and that this address may be translated into a globally unique address using conventional Network Address Translation (NAT) techniques in the intermediary device 4.

In another example the control signal is transmitted from the user equipment UE1 even when no user interaction has occurred. It may for example be that an application is running on the user equipment UE1 and that this application is configured to control a heating system at home comprising a temperature sensor. As explained the virtual representation may present the state of the heating system, being the measured temperature, to the application. The application may be programmed to switch on the heating system, and thus transmit a control signal, if the temperature at home drops below a certain value. In other words, the interaction with the virtual representation is not restricted to a user interaction.

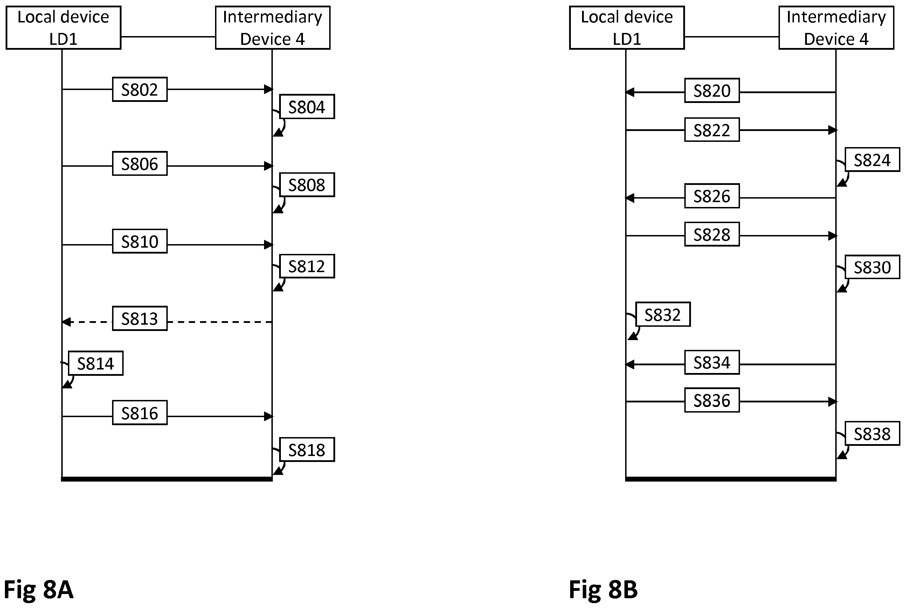

FIGs. 8A and 8B show message diagrams depicting manners in which the intermediary device 4 may obtain at least one of the device identifier ID1, the address AD1 and a state ST1 of the local device LD1. In FIG. 8A the intermediary device 4 receives in step S802 a message comprising the device identifier ID1. This message is broadcast by the local device LD1 over the local network meaning that it is not directed specifically at intermediary device 4. It is not required that local device LD1 knows the address of intermediary device 4 in the local network. In step S804 the intermediary device 4 stores the device identifier ID1. The intermediary device is now aware of the existence of the local device LD1, i.e. knows that local device LD1 may connect to the local network 2. In step S806 another broadcast message from local device LD1 is captured by the intermediary device 4. This broadcast message comprises the address AD1 of the local device LD1 in the local network 2. In step S808 the intermediary device 4 stores this address. The intermediary device is now informed on where it can send, or forward, signals that are meant for local device LD1. In step S810 yet another broadcast message is captured by the intermediary device 4. This broadcast message comprises a state ST1 of the local device LD1. The state indicates a current status of the local device. It should be appreciated that the messages sent in steps S806 and S810 may also comprise some sort of identifier associated with LD1, indicating that the respectively sent address AD1 and state ST1 are associated with local device LD1. In step S812 the intermediary device 4 stores the state ST1. The intermediary device now comprises the identifier ID1, current state ST1,and the address AD1.

It should be appreciated that the local device LD1 may repeatedly broadcast a message comprising all three of the device identifier ID1, the address AD1 and the current state of the local device.

Of course, the state of a device may change. Step S814 represents a change of the state of the local device LD1. To illustrate, assume that the local device LD1 is a washing machine and that step S814 indicates that the washing machine changes from a first state, wherein the washing machine is running, to a second state, wherein the washing machine is not running, for example because the washing machine has finished a washing program. The state change may optionally also occur in response to a control signal CS1 received from the intermediary device as explained with reference to FIG. 7. Step S813 depicts this optional step. In step S816 the intermediary device 4 again captures a message broadcast by the local device LD1. This message comprises the new, second state of the local device LD1 (the washing machine). In step S818 the intermediary device stores this second state, that indicates that the washing machine is not running.

FIG. 8B schematically shows another manner in which the device identifier ID1, the address AD1 and the state ST1 may be obtained by the intermediary device 4. In steps S820, S826 and S834 the intermediary device 4 sends respective probe signals over the local network. Note that the probe signals may or may not be specifically directed at local device LD1. With these probe signals the intermediary device 4 announces itself as being present in the local network 2 and the intermediary device 4 then waits for response signals. The local device LD1 may be configured to recognize these probe signals and to transmit a response signal. In step S820 a first probe signal is sent by intermediary device 4 over the local network 2. This first probe signal is received by local device LD1. In step S822 the intermediary device 4 receives a response signal from the local device LD1. The response signal comprises the device identifier ID1 of the local device LD1, the address AD1 and state ST1 of the local device LD1. In step S824 the intermediary device 4 stores the device identifier ID1, the address AD1 and the state ST1 of the local device. Note that in this embodiment, all three of the device identifier ID1, the address AD1 and the state ST1 of the local device LD1 are comprised in the response signal received in step S822, and thus are obtained in response to sending one probe signal in step S820. Of course, it may also be that the device identifier ID1, the address AD1 and the state ST1 are received separately in response to different probe signals. Steps S826, S828 and S830 are similar to steps S820, S822 and S824 described above. Neither the device identifier ID1, the address AD1 and the state ST1 have changed. In step S832 however the state of the local device LD1 changes. Instead of state ST1, the local device LD1 is now associated with state ST2. In step S834 again a probe signal is transmitted by the intermediary device 4 over the local network 2 and in step S836 a response signal from the local device LD1 is received comprising the new state ST2. In step S838 the new state ST2 is stored in the intermediary device and replaces previous state ST1. FIGs. 8A and 8B show two ways that enable the intermediary device to always comprise a recent state of a local device.

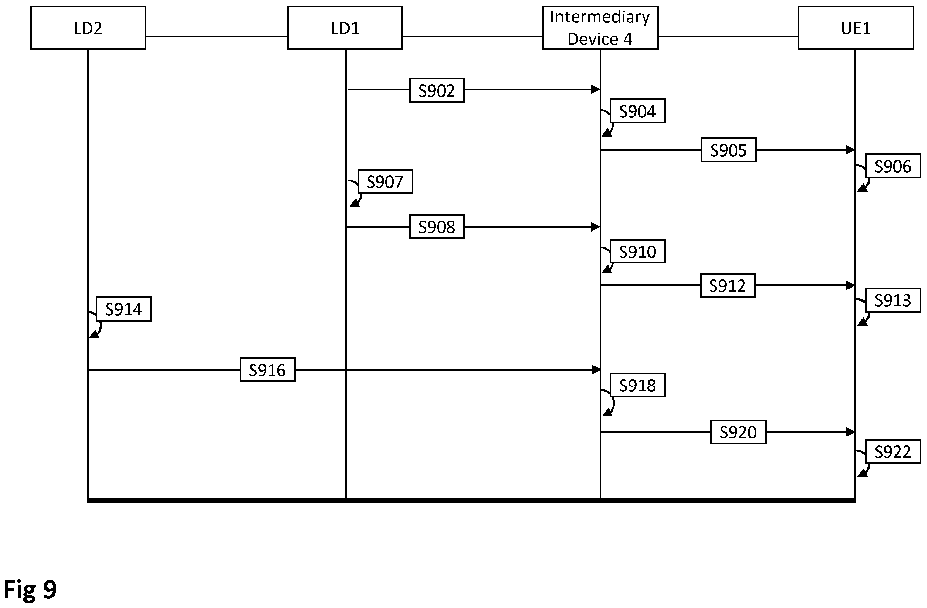

FIG. 9 shows a message diagram according to another embodiment of the present invention. In this embodiment a second local device LD2 is present. Obviously, as LD1, local device LD2 is connected to the local network 2. In step S902 the intermediary device 4 receives a message comprising the device identifier ID1, address AD1, and state ST1. In step S904 the intermediary stores these. In step S905 both the profile information comprising the device identifier ID1 and the state ST1 are sent over the public network 6 to user equipment UE1. User equipment UE1 receives in step S905 the profile information and the state ST1. UE1 then presents in step S906 a virtual representation of the local device LD1 and the virtual representation may also comprise the state ST1. In step S907, the state of local device LD1 changes, from ST1, to ST2. In step S908 the intermediary device receives another message from LD1 comprising again the device identifier ID1 and the address AD1. However the message does not comprise state ST1, since it is no longer associated with local device LD1. Instead, the message received in step S908 comprises state ST2. In step S910 this new state ST2 is stored in the intermediary device 4. In step S912 the intermediary device 4 again sends the profile information comprising identifier ID1 to the user equipment UE1 over the public network. In addition, in step S912 the new state ST2 is transmitted for the user equipment. The user equipment thus receives in step S912 the identifier ID1 and the new state ST2. The user equipment now updates in step S913 the virtual representation so that the new state ST2 is reflected in the virtual representation. In step S914, the second local device LD2, which is an unknown device to the intermediary device 4, connects to the local network 2. In step S916 the intermediary device receives identifier ID2, associated with local device LD2 and in step S918 stores this identifier ID2. In step S918 also the profile information is updated. The profile information now comprises both ID1 and ID2. In step S920 the intermediary device transmits this updated profile information to user equipment UE1. User equipment UE1 receives in step S920 the updated profile information. In step S922 the user equipment UE1 presents a virtual representation of local device LD1 and state ST2 associated with local device LD1 and another virtual representation of local device LD2. In this example the intermediary device has not (yet) received a state associated with local device LD2, so that no state of local device LD2 is reflected in the virtual representation of LD2.

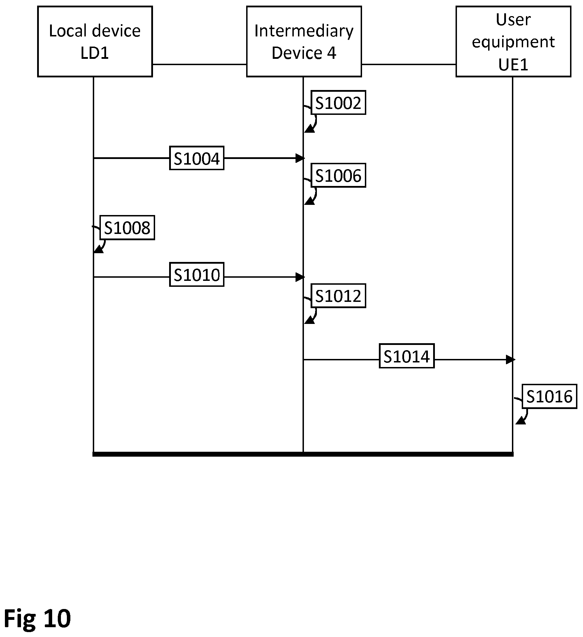

FIG. 10 shows a message diagram according to an embodiment of the invention. It should be noted that each transmitted message between local device LD1 and intermediary device 4 and between intermediary device 4 and user equipment UE1 in this diagram may comprise the device identifier ID1 associated with the local device LD1 and/or the address AD1 of the local device LD1. However in the following description only reference is made to the transmission of states of local device LD1. In step S1002 the intermediary device 4 obtains and stores a reference state. In an example the local device LD1 is a refrigerator that is connected to the local network 2. The reference state may then be a temperature of a refrigerator that should not be exceeded, for example 10 degrees Celsius. The reference state may be obtained in various ways, such as a user programming the reference state into the intermediary device 4, or by receiving from local device LD1 the reference state over the local network 2. In step S1004 the intermediary device 4 receives a state ST1 from the local device LD1. In step S1006 the intermediary device 4 compares the received state ST1 with the reference state. Based on this comparison, state ST1 is not transmitted over the public network to the user equipment UE1. Continuing the above example state ST1 may indicate that the temperature in the refrigerator is 5 degrees Celsius. Because this is still in the right range, because the temperature is still below the 10 degrees Celsius specified in the reference state, the state ST1 is not transmitted for the user equipment UE1. In step S1008 the state of the local device LD1 changes, from ST1 to ST2. Next, in step S1010 the intermediary devices 4 captures a message from the local device LD1. The message comprises the new state ST2, and does not comprise previous state ST1. Again, in step S1012 the intermediary device compares state ST2 with the reference state. Based on this comparison the intermediary device transmits the state ST2 for the user equipment UE1 over the public network 6. In step S1014 the user equipment UE1 receives state ST2 from the intermediary device 4. In the example situation state ST2 may indicate that the temperature of the refrigerator is 15 degrees Celsius. Since this is higher than the reference temperature of 10 degrees Celsius, state ST2 is transmitted over the public network 6 for the user equipment UE1 and received by the user equipment UE1 that is enabled to present in step S1016 a virtual representation of the local device LD1 and its state ST2.

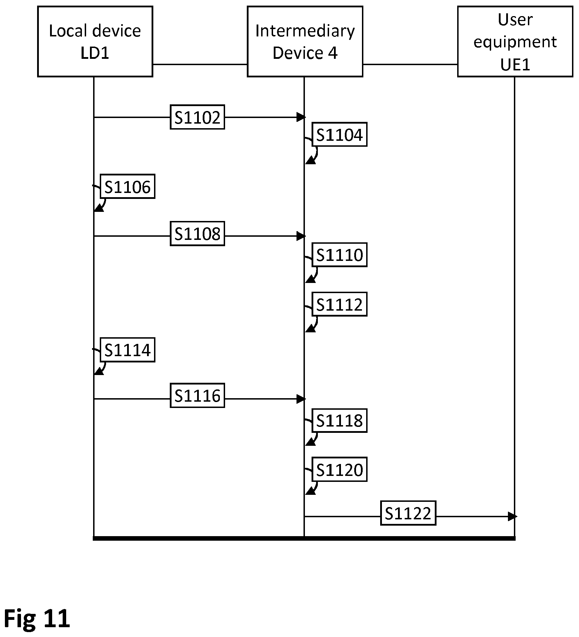

FIG. 11 shows another message diagram according to an embodiment of the invention. It should be noted that each transmitted message in this diagram may comprise the device identifier ID1 or the address AD1 of the local device LD1. However, in the following description only reference is made to the transmission of states. In step S1102 the intermediary device 4 receives a state ST1 of the local device LD1 and stores this state in step S1104. Then, in step S1106, the state of the local device LD1 changes, from state ST1 to ST2. In step S1108 the intermediary device receives over the local network 2 this state ST2 and in step S1110 stores it. Next, in step S1112, the intermediary device compares state ST2 with state ST1. Local device LD1 may be an electricity metering device and the states of the device may indicate meter readings. State ST1 may indicate a meter reading of 10,000 kWh and state ST2 may indicate a meter reading of 10,010 kWh. Based on the comparison between ST1 and ST2, ST2 is not sent to the user equipment UE1. The comparison for example comprises a calculation of the difference between the two meter readings (being 10 kWh). In step S1114 however again the state changes, from ST2 to ST3. The meter reading has for example increased to 10,200 kWh. In step S1116 the intermediary device 4 receives the state ST3 and stores this state ST3 in step S1118. In step S1120 the intermediary device compares ST2, e.g. the second meter reading, with ST3, e.g. a third meter reading. Alternatively, S1120 might comprise comparing between the latest state that is received, ST3 and the latest state that was transmitted to the UE, ST1. Based on this comparison the state ST3 is transmitted for the user equipment UE1. In the example situation, the intermediary devices may calculate the difference between the second and third meter readings (being 190 kWh). It may be that the intermediary device 4 is programmed to send a state if the difference with the prior state is more than 100 kWh. Hence the meter reading 10,200 kWh may be transmitted over the public network 6 for the user equipment UE1. In step S1122 the user equipment UE1 receives state ST3 from the intermediary device 4.

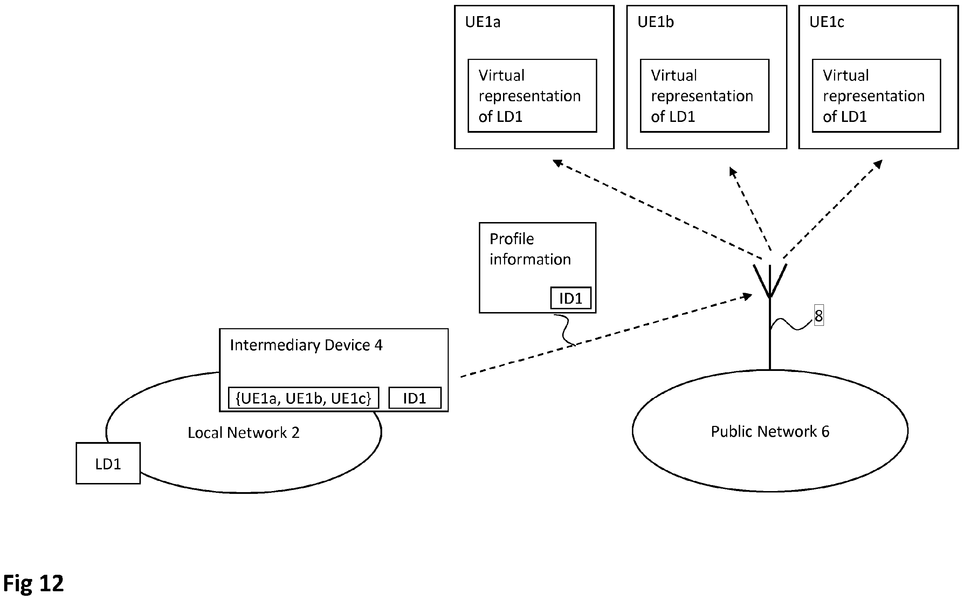

FIG. 12 schematically depicts a situation with multiple user equipments, namely UE1a, UE1b and UE1c. In this situation communication may occur between the local device LD1 on one side and each of UE1a, UE1b, UE1c on the other side. As indicated, the intermediary device 4 stores a list with the three user equipments to which the profile information should be sent. As a consequence the profile information comprising the device identifier ID1 of the local device LD1 is transmitted over the public network to UE1a and UE1b and UE1c. Obviously UE1a, UE1b, and UE1c may be connected to the public network through different base stations or even via different MNOs. The profile information may also be transmitted to a D2D registry in the public network as described with reference to FIG. 4, wherein UE1a, UE1b, and/or UE1c receive the profile information from the D2D registry. The transmission of the profile information could pass over multiple D2D registries in case the intermediary device 4 is associated with a different D2D registry than e.g. UE1b. Such a situation could for example occur if UE1b has a subscription to a different MNO than the intermediary device. In that case the D2D registry associated with the intermediary device 4 could forward the profile information to e.g. UE1b by forwarding the profile information to the D2D registry associated with UE1b. Last mentioned D2D registry may then forward the profile information to UE1b.

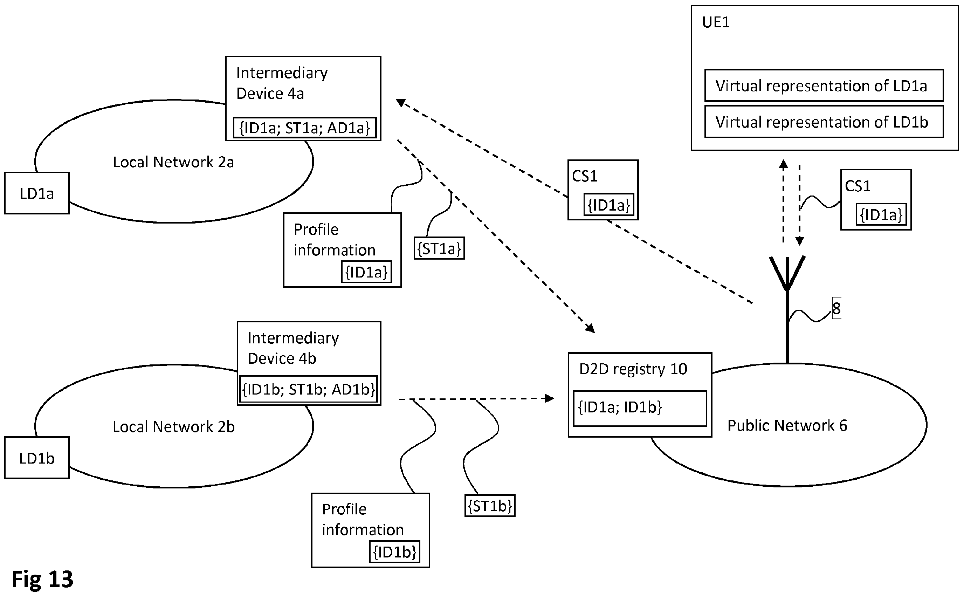

FIG. 13 shows another embodiment of the invention. Two local networks 2a and 2b are shown. Local device LD1a is connected to local network 2a and local device LD1b is connected to local network 2b. As shown, intermediary device 4a has stored device identifier ID1a, state ST1a and address AD1a of local device LD1a. Similarly, intermediary device 4b has stored device identifier ID1b, state ST1b and address AD1b of local device LD1b. Both intermediary devices 4a and 4b transmit profile information and a state to the D2D registry as indicated. The user equipment may now receive from the D2D registry via the public network the profile information comprising ID1a and the profile information comprising ID1b; and states ST1a and ST1b. Hence the user equipment is enabled to present a virtual representation of local device LD1a in the local network 2a and of local device LD1b in the local network 2b. The user equipment transmits a control signal CS1. Since the control signal is meant for local device LD1a, the control signal CS1 comprises the device identifier ID1a. In this example, the user equipment comprises an identifier and/or address (not shown) of the intermediary device 4a based on which the user equipment UE1 routes the control signal CS1 to intermediary device 4a. Note that the transmitted profile information may comprise the address and/or identifier of the intermediary device 4a (not shown) and the user equipment UE1 may have retrieved the address and/or identifier of the intermediary device 4a from the received profile information (not shown). Subsequently, the intermediary device 4a, because it has stored the address AD1a of the local device ID1a in the local network 2a, can transmit the control signal CS1 to the local device LD1a. It should be appreciated that the described list may also be present in the user equipment UE1 and that as a consequence correct routing information is comprised in the control signal CS1. Alternatively (not shown), instead of transmitting profile information and a state to a D2D registry, the intermediary device 4a may transmit the information of local device LD1a to the user equipment UE1 and the intermediary device 4b may transmit the information of local device LD1b to the user equipment UE1. Then, as described above, the user equipment UE1 is enabled to present a virtual representation of UE1 and a virtual representation of UE2 separately or in one group. As also described above, the user equipment UE1 may comprise an identifier and/or address of the intermediary device 4a associated with the local device LD1a, based on which the user equipment can route the control signal CS1 to the intermediary device.

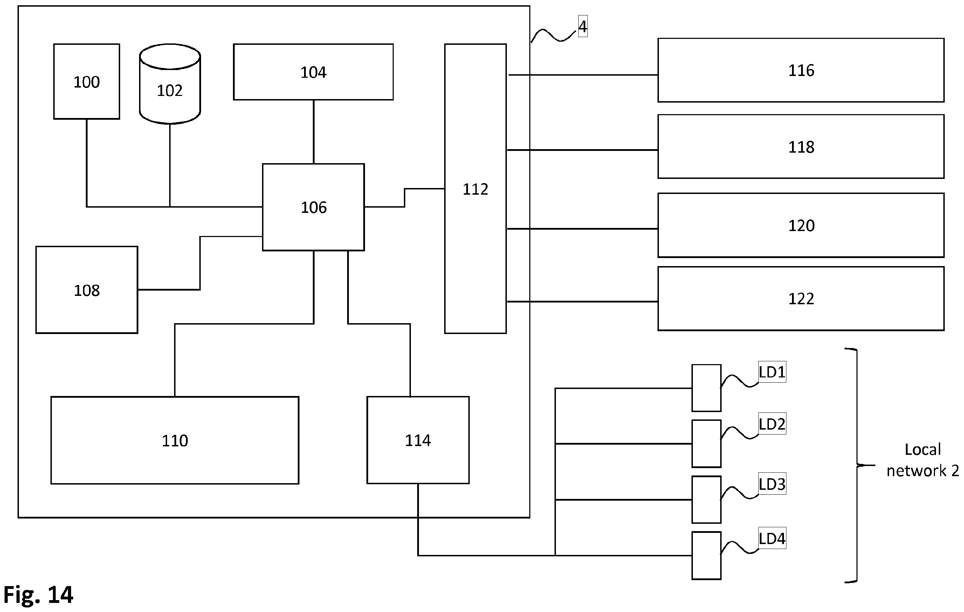

FIG. 14 is a schematic illustration of an intermediary device 4 according to an embodiment of the invention. The intermediary device 4 comprises a permanent storage 100 and storage means 102. Storage means 102 are configured to store the device identifier, the address and state of a local device. The storage means 102 and the permanent storage 100 is connected to processing means 106. The processing means 106 prepare the profile information comprising identifiers that are stored in storage means 102. The processing means further process received control signals and transmits these to a local device. The intermediary device also comprises a Random Access Memory (RAM) connected to the processing means 106.

The intermediary device 4 may further comprise a multipurpose radio-chip 110, that is configured to connect to various networks. The multipurpose radio-chip 110 can connect to radio networks, such as LTE, WiFi infrastructure mode, Zigbee, Pan, etcetera. The multipurpose radio-chip 110 can also directly connect to networks or devices in its vicinity, for example by using Bluetooth, Zigbee, ad hoc WiFi, etcetera. In addition the intermediary device 4 may comprise an Ethernet interface 114. Either the multipurpose radio-chip or the Ethernet interface might be used to provide a local network interface through which it can connect to local devices LD1-LD4 in the local network 2. The intermediary device may for example be connected to a router with an Ethernet cable. A logical interface 112 is also present in the intermediary device 4, which provides a public network interface. The logical interface 112 provides connectivity to a registry 116 of an external device or service. This may be convenient when a list with connectivity characteristics of local devices is stored in the registry 116 of the external device or service and the list is to be stored in the storage means 102. As an example, the connectivity options of a newly bought device could be fetched from a cloud service of the vendor of the device. As another example, a (partial) list of devices in a household could be kept on a social media service together with connectivity options of the devices. Yet another example would be that the MNO keeps a list and can use the interface 116 to configure the intermediate device e.g. when it is replaced. The intermediary device 4 may also connect to a human interface 118, to which for example a touch screen, keyboard, pointer device may be connected. The logical interface 112 may also provide connectivity to the 3GPP core network 120 of a mobile network operator, i.e. a public network, or internet 122 connectivity. The intermediary device 4 furthermore comprises a physical layer interface 108, such as a light interface, infrared interface, ultrasound interface etcetera. This interface may be used to directly connect to devices in the vicinity, but also to connect to the local network.

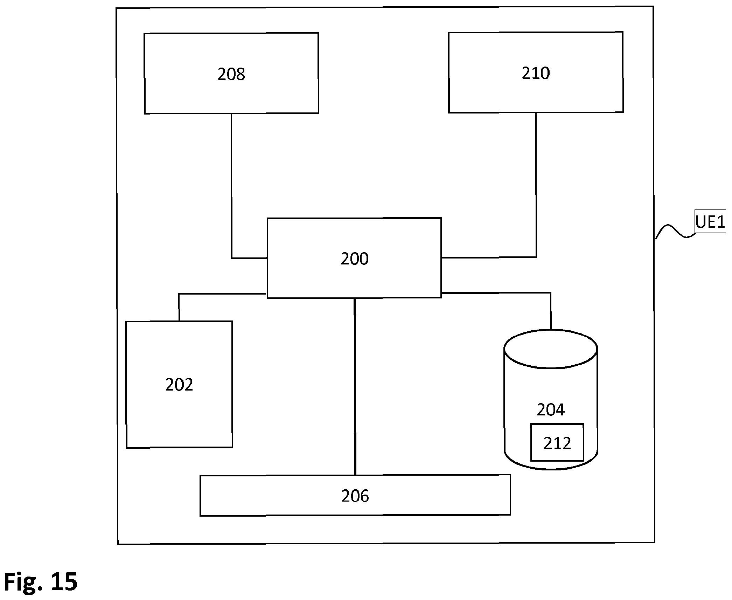

FIG. 15 is a schematic illustration of a user equipment UE1 according to an embodiment of the invention. The user equipment comprises a public interface 206 to be able to set up a connection with the public network, such as an LTE connection with a core network of an MNO. The user equipment also comprises a random access memory 202 and storage means 204. In this embodiment an application 212 is stored in the storage means 204. Application 212 is configured to control a specific local device in a (remote) local network. The user equipment also comprises a display 210 so that a virtual representation may be shown to a user of the user equipment UE1. In addition, the user equipment UE1 comprises interaction means that enable interaction with the virtual representation, such as a physical button, microphone, or touch screen.

The user equipment UE1 also comprises a processor 200 that is configured to run an application 212 and present a virtual representation to application 212, or to a user by displaying the virtual representation on a display 210. The displaying of the virtual representation might be a feature that is installed as part of the operating system, but might also be an add-on application like 212 that is installed by the user from e.g. an App Store. The processor 200 is also configured to encapsulate and forward messages between the user equipment UE1 and the intermediary device 4 using available network connections. Likely the public network interface 206 comprises an LTE interface and the processor uses this LTE interface to connect to the MNO core network. Hence, the user equipment UE1 can address the intermediary device 4 if the intermediary device 4 is also connected to the MNO core network. In addition, the public network interface 206 may also comprise a WiFi interface that the user equipment could use to connect to an access point of the public network 6.

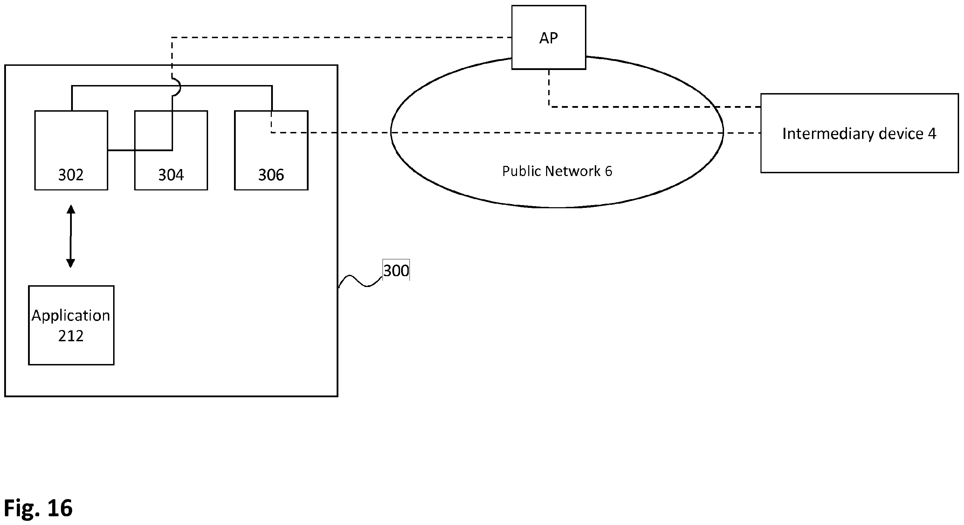

FIG. 16 schematically shows the software hierarchy structure 300 that is implemented in a user equipment UE1 according to an embodiment of the invention. In the embodiment the virtual representation comprises a virtual interface 302, which is presented to application 212 running on the user equipment UE1. In addition the user equipment comprises a WiFi interface 304 and an LTE interface 306. The virtual interface 302 is presented at the level of the operating system. As a consequence, the operating system provides to the application 212 three network interfaces, namely the virtual interface 302 of the virtual representation, a WiFi interface 304 and an LTE interface 306. Note that the WiFi interface 304 and the LTE interface comprise physical components (not shown) installed in a user equipment, whereas the virtual interface 302 does not. Also, WiFi interface 304 and LTE interface 306 may be used to connect to both local networks and to public networks. Virtual interface 302 in this embodiment only represents a local network. As indicated, WiFi interface 304 can set up a WiFi connection with an access point AP of the public network in order to transmit messages to the intermediary device 4. LTE interface 306 can connect to the public network and address the intermediary device 4, (which is connected to the public network). As such, both the WiFi interface 304 and the LTE interface 306 may be used by the virtual interface 302 to set up a tunnel between the user equipment UE1 and the intermediary device 4.

Because of this software structure, the application 212 perceives that the virtual interface 302 is a "regular" network interface connected to the local network 2, or that the virtual interface 302 offers a direct connection with a local device.

In one scenario application 212 requests broadcast of a message, for example a UPnP broadcast message to announce its presence and to discover what services are accessible. The virtual interface 302 is configured to handle this broadcast message and virtual interface 302 will encapsulate and forward the message to intermediary device 4 via at least one of the WiFi interface 304 and LTE interface 306.

In another scenario, the application when started, tries to access address AD1 of the local device LD1. The application 212 sends for example a message directed at a local ip_address:port_number of the local device. The virtual representation is configured to capture this message, e.g. by creating the virtual interface 302 or a route specifically for this ip address. The virtual representation, preferably the virtual interface 302, transmits a signal to the intermediary device that application 212 would like to connect to the local device LD1. This signal is sent over the public network 6. The virtual representation, preferably the virtual interface 302, sets up a tunnel to the intermediary device 4 such that traffic can flow.

In yet another scenario, application 212 requests a (multicast) DNS query for the address AD1 of the local device LD1. This request may be answered by the virtual representation. The request may also be captured by the virtual representation and forwarded to the intermediary device, in which case either the intermediary device answers or forwards this request to the local device LD1 in the local network 2. Once local device LD1 answers to the request, the intermediary device 4 informs the virtual representation on the user equipment that the local device LD1 was found (and provides the ip address, if necessary). The representation layer setups a tunnel for this traffic and forwards the traffic between the application 212 and the intermediary device 4.

Another possibility is that the virtual representation comprises a layer that sits on top of the Wifi 304 and LTE 306 interfaces. The layer can be implemented using a Deep Packet Inspection (DPI) mechanism that inspects whether any relevant messages are being exchanged. If a relevant message or package is found, it is forwarded to the intermediary device 4.

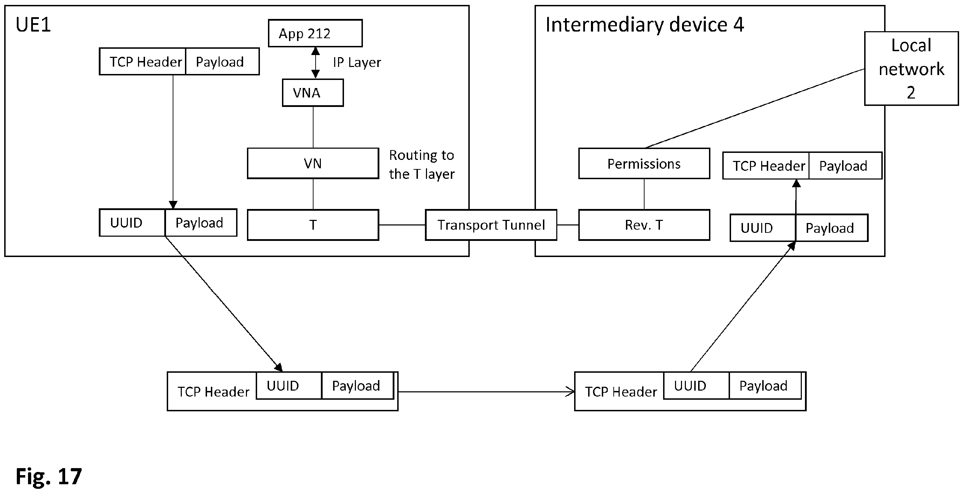

FIG. 17 shows an example of communication between a user equipment UE1 and the intermediary device 4. In this embodiment, the user equipment UE1 comprises a list of local devices with their respective device identifiers. The figure shows UUID (Universally Unique Identifier) but these device identifiers could be any identifier, such as global common name, ip address, human understandable name, IMSI or derivative thereof, etc. The intermediary device 4 in this embodiment also comprises such a list.

The user equipment UE1 in this embodiment is configured to create a Virtual Network (VN) and a Virtual Network Adapter (VNA) on a so-called local network. Local networks are normally physical in home LAN networks, but also exist in virtualization software such as VirtualBox or VMWare. They are characterized by having ip addresses that are in the private network ranges' such as 10.x.x.x.x or 192.168.x.x (x = 0 - 255) and often have a single gateway connected to the internet that performs Network Address Translation.

The user equipment UE1 further gives all the devices known to it an ip address in the virtual network. The ip addresses that the user equipment UE1 assigns could be ip addresses in a private range that is reachable through the virtual network interface. For example, the phone's virtual network interface could be assigned the ip address 10.0.0.5 with netmask 255.0.0.0; if the phone then assigns another random ip address in the range 10.x.x.x to other devices, IP traffic can be routed directly to the virtual representation of this device.

The user equipment UE1 further creates a translation layer T that translates the ip addresses to an identifier known to the intermediary device and vice versa and provides this translation layer T with the ip address of the intermediary device (or if necessary, the tunnel endpoint).

FIG. 17 further shows what happens in an embodiment when communication occurs between the user equipment UE1 and the intermediary device 4. The application sends a message through the virtual network adapter to the ip address of the virtual representation. The translation layer T captures the traffic, replaces the ip address with the device identifier and encapsulates that message such a way that the message reaches the intermediary device 4. When the message arrives at the intermediary device 4, the intermediary device 4 decapsulates the message, replaces the identifier with an ip address and puts the traffic into the local network. Optionally, the intermediary device 4 could use permissions mechanisms to decide whether UE1 is allowed to send this message. And whenever traffic is returned, the reverse is being done.

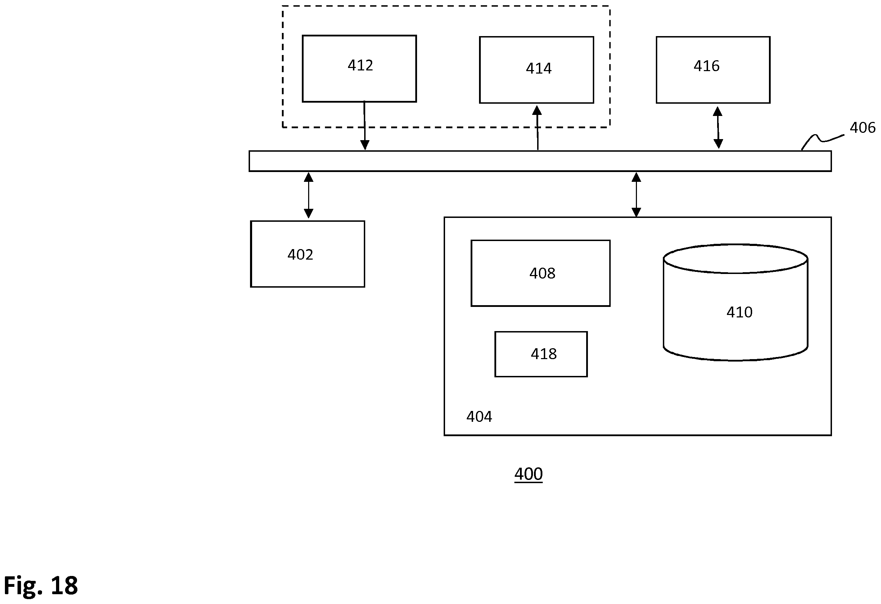

FIG. 18 depicts a block diagram illustrating exemplary data processing system, processing means, or processors that may be used in a computing system as described with reference to Fig. 14 and 15.

As shown in FIG. 18, the data processing system 400 may include at least one processor 402 coupled to memory elements 404 through a system bus 406. As such, the data processing system may store program code within memory elements 404. Further, the processor 402 may execute the program code accessed from the memory elements 404 via a system bus 406. In one aspect, the data processing system may be implemented as a computer that is suitable for storing and/or executing program code. It should be appreciated, however, that the data processing system 400 may be implemented in the form of any system including a processor and a memory that is capable of performing the functions described within this specification.

The memory elements 404 may include one or more physical memory devices such as, for example, local memory 408 and one or more bulk storage devices 410. The local memory may refer to random access memory or other non-persistent memory device(s) generally used during actual execution of the program code. A bulk storage device may be implemented as a hard drive or other persistent data storage device. The processing system 400 may also include one or more cache memories (not shown) that provide temporary storage of at least some program code in order to reduce the number of times program code must be retrieved from the bulk storage device 410 during execution.

Input/output (I/O) devices depicted as an input device 412 and an output device 414 optionally can be coupled to the data processing system. Examples of input devices may include, but are not limited to, a keyboard, a pointing device such as a mouse, or the like. Examples of output devices may include, but are not limited to, a monitor or a display, speakers, or the like. Input and/or output devices may be coupled to the data processing system either directly or through intervening I/O controllers.

In an embodiment, the input and the output devices may be implemented as a combined input/output device (illustrated in FIG. 18 with a dashed line surrounding the input device 412 and the output device 414). An example of such a combined device is a touch sensitive display, also sometimes referred to as a "touch screen display" or simply "touch screen". In such an embodiment, input to the device may be provided by a movement of a physical object, such as e.g. a stylus or a finger of a user, on or near the touch screen display.

A network adapter 416 may also be coupled to the data processing system to enable it to become coupled to other systems, computer systems, remote network devices, and/or remote storage devices through intervening private or public networks. The network adapter may comprise a data receiver for receiving data that is transmitted by said systems, devices and/or networks to the data processing system 400, and a data transmitter for transmitting data from the data processing system 400 to said systems, devices and/or networks. Modems, cable modems, and Ethernet cards are examples of different types of network adapter that may be used with the data processing system 400.

As pictured in FIG. 18, the memory elements 404 may store an application 418. In various embodiments, the application 418 may be stored in the local memory 408, the one or more bulk storage devices 410, or apart from the local memory and the bulk storage devices. It should be appreciated that the data processing system 400 may further execute an operating system (not shown in FIG. 18) that can facilitate execution of the application 418. The application 418, being implemented in the form of executable program code, can be executed by the data processing system 400, e.g., by the processor 402. Responsive to executing the application, the data processing system 400 may be configured to perform one or more operations or method steps described herein.

In one aspect of the present invention, the data processing system 400 may represent a processor or processing means as described herein.

In another aspect, the data processing system 400 may represent a client data processing system. In that case, the application 418 may represent a client application that, when executed, configures the data processing system 400 to perform the various functions described herein with reference to a "client". Examples of a client can include, but are not limited to, a personal computer, a portable computer, a mobile phone, or the like.

In yet another aspect, the data processing system 400 may represent a server. For example, the data processing system may represent an (HTTP) server, in which case the application 418, when executed, may configure the data processing system to perform (HTTP) server operations.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or harddisk drive or any type of solid-state random-access semiconductor memory) on which alterable information is stored. The computer program may be run on the processor 402 described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The present invention is limited only by the scope of the appended claims.

## Claims

1. A method for communicating between at least one local device (LD1-LD3) connected to a local network (2) and a user equipment (UE1) connected to a public mobile network (6), via an intermediary device (4) that is configured to connect to the local network and to the public mobile network, the method comprising the steps in the intermediary device of:
- connecting to the local network and storing a device identifier of the at least one local device in the local network;
- connecting to the public mobile network and transmitting profile information for the user equipment via the public mobile network, enabling the user equipment to present a virtual representation of the at least one local device based on the profile information, the profile information comprising the device identifier;
- receiving a state indicating a status of the at least one local device over the local network;
- transmitting the state over the public mobile network for the user equipment;
**characterized in that** the profile information for the user equipment is transmitted to a registry (10) in the public mobile network, wherein the registry caches and transmits the profile information to the user equipment, wherein the profile information further comprises an address and/or an identifier of the intermediary device, and the state is transmitted to the registry in the public mobile network, wherein the registry caches and transmits the state to the user equipment.

2. The method according to claim 1, further comprising:
- comparing the received state with a reference state;
- transmitting the state over the public mobile network for the user equipment based on the comparison between the state and the reference state.

3. The method according to one or more of the preceding claims, further comprising:
- storing an address of the at least one local device in the local network;
- receiving via the public mobile network from the user equipment a control signal for the at least one device associated with the device identifier;
- transmitting via the local network the control signal to the address of the local device associated with the device identifier.

4. The method according to one or more of the preceding claims, wherein at least one of the device identifier, an address of the local device in the local network and the state of the local device is obtained by at least one of:
- capturing an announcement, broadcast by the at least one local device over the local network; and
- transmitting a probe signal over the local network and receiving a signal in response to the probe signal from the at least one local device.

5. The method according to one or more of the preceding claims, further comprising updating the profile information comprising obtaining a new device identifier of a new local device.

6. The method according to one or more of the preceding claims, further comprising:
- storing a list comprising a plurality of user equipments, the plurality comprising the user equipment;
- transmitting profile information for the plurality of user equipments enabling the plurality of user equipments to present respective virtual representations of the local device in the local network.

7. An intermediary device (4) for communicating between at least one local device (LD1-LD3) connected to a local network (2) and a user equipment (UE1) connected to a public mobile network (6), via the intermediary device, wherein the intermediary device comprises:
- a local network interface configured to connect to the local network;
- a public network interface configured to connect to the public mobile network;
- storage means configured to store a device identifier, received over the local network interface, of the at least one local device in the local network;
- processing means configured for preparing profile information for transmission for the user equipment via the public mobile network, enabling the user equipment to present a virtual representation of the local device based on the profile information, the profile information comprising the device identifier; and
wherein the intermediary device is further configured to receive a state indicating a status of the at least one local device over the local network, and to transmit the state over the public mobile network for the user equipment;
**characterized in that** the profile information for the user equipment is transmitted to a registry (10) in the public mobile network, wherein the registry caches and transmits the profile information to the user equipment, wherein the profile information further comprises an address and/or an identifier of the intermediary device, and the state is transmitted to the registry in the public mobile network, wherein the registry caches and transmits the state to the user equipment.

8. The intermediary device according to the preceding claim, further configured to:
- compare the received state with a reference state;
- transmit the state over the public mobile network for the user equipment based on the comparison between the state and the reference state.

9. The intermediary device according to one or more of the preceding claims 7-8, further comprising:
- storage means configured to store an address of the at least one local device in the local network;
- processing means configured to process a control signal received via the public network interface from the user equipment for the at least one local device associated with the device identifier;
- wherein the processing means is further configured to transmit the control signal, or a derivative thereof, via the local network interface to the address of the local device associated with the device identifier.

10. The intermediary device according to one or more of the preceding claims 7-9, further configured to obtain at least one of the device identifier, the address and the state by at least one of:
- capturing an announcement, broadcast by the at least one local device over the local network; and
- sending a probe signal over the local network and receiving a signal in response to the probe signal from the at least one device.

11. The intermediary device according to one or more of the preceding claims 7-10, further configured to update the profile information by obtaining a device identifier of a new local device.

12. The intermediary device according to one or more of the preceding claims 7-11, wherein
- the storage means are further configured to store a list comprising a plurality of user equipments;
- the processing means are further configured to transmit profile information for the plurality of user equipments enabling the plurality of user equipments to present respective virtual representations of the local device in the local network.

13. A user equipment (UE1) for communicating between at least one local device (LD1-LD3) connected to a local network (2) and the user equipment connected to a public mobile network (6), via an intermediary device (4) connected to the local network and to the public mobile network, the user equipment comprisinga processor configured to:
- receive profile information from the intermediary device via the public mobile network, the profile information comprising a device identifier of the at least one local device in the local network and configured to present a virtual representation of the local device on the basis of the profile information;
- receive a state and to indicate a status of the at least one local device in the virtual representation based on the received state;
**characterized in that** the profile information for the user equipment is received from a registry (10) in the public mobile network, wherein the registry caches and transmits the profile information to the user equipment, wherein the profile information further comprises an address and/or an identifier of the intermediary device, and the state is received from the registry in the public mobile network, wherein the registry caches and transmits the state to the user equipment.

14. The user equipment according to claim 13, further comprising:
- interaction means configured to enable interaction with the virtual representation of the local device in the local network by transmitting via the public mobile network to the intermediary device a control signal for the at least one device associated with the device identifier.

15. The user equipment according to one or more of the preceding claims 13-14, further configured to receive further profile information over the public mobile network from a further intermediary device connected to a further local network and to the public mobile network, the further profile information comprising a further device identifier of at least one further local device connected to the further local network, and configured to present a further virtual representation of the further local device on the basis of the further profile information,
wherein the virtual representation and the further virtual representation are presented as members of one group.

16. A computer program or suite of computer programs comprising at least one software code portion or a computer program product storing at least one software code portion, the software code portion, when run on a computer system, being configured for executing the method according to one or more of the preceding claims 1-6.

## Patentansprüche

1. Verfahren zum Kommunizieren zwischen mindestens einer lokalen Vorrichtung (LD1-LD3), verbunden mit einem lokalen Netzwerk (2), und einem Benutzergerät (UE1), verbunden mit einem öffentlichen Mobilfunknetz (6), über eine Zwischenvorrichtung (4), die ausgelegt ist zum Verbinden mit dem lokalen Netzwerk und dem öffentlichen Mobilfunknetz, wobei das Verfahren in der Zwischenvorrichtung die folgenden Schritte umfasst:
- Verbinden mit dem lokalen Netzwerk und Speichern einer Vorrichtungskennung der mindestens einen lokalen Vorrichtung in dem lokalen Netzwerk;
- Verbinden mit dem öffentlichen Mobilfunknetz und Übertragen von Profilinformationen für das Benutzergerät über das öffentliche Mobilfunknetz, wodurch das Benutzergerät befähigt wird, eine virtuelle Repräsentation der mindestens einen lokalen Vorrichtung, basierend auf den Profilinformationen, zu präsentieren, wobei die Profilinformationen die Vorrichtungskennung umfassen;
- Empfangen eines Zustands, der einen Status der mindestens einen lokalen Vorrichtung angibt, über das lokale Netzwerk;
- Übertragen des Zustands über das öffentliche Mobilfunknetz für das Benutzergerät;
**dadurch gekennzeichnet, dass** die Profilinformationen für das Benutzergerät an eine Registratur (10) in dem öffentlichen Mobilfunknetz übertragen werden, wobei die Registratur die Profilinformationen zwischenspeichert und an das Benutzergerät überträgt, wobei die Profilinformationen ferner eine Adresse und/oder eine Kennung der Zwischenvorrichtung umfassen, und wobei der Zustand an die Registratur in dem öffentlichen Mobilfunknetz übertragen wird, wobei die Registratur den Zustand zwischenspeichert und an das Benutzergerät überträgt.

2. Verfahren nach Anspruch 1, ferner umfassend:
- Vergleichen des empfangenen Zustands mit einem Referenzzustand;
- Übertragen des Zustands über das öffentliche Mobilfunknetz für das Benutzergerät, basierend auf dem Vergleich zwischen dem Zustand und dem Referenzzustand.

3. Verfahren nach einem oder mehreren der vorhergehenden Ansprüche, ferner umfassend:
- Speichern einer Adresse der mindestens einen lokalen Vorrichtung in dem lokalen Netzwerk;
- Empfangen über das öffentliche Mobilfunknetz, von dem Benutzergerät, eines Steuersignals für die mindestens eine Vorrichtung, die mit der Vorrichtungskennung assoziiert ist;
- Übertragen, über das lokale Netzwerk, des Steuersignals an die Adresse der lokalen Vorrichtung, die mit der Vorrichtungskennung assoziiert ist.

4. Verfahren nach einem oder mehreren der vorhergehenden Ansprüche, wobei die Vorrichtungskennung und/oder eine Adresse der lokalen Vorrichtung in dem lokalen Netzwerk und/oder der Zustand der lokalen Vorrichtung durch mindestens eines der Folgenden erhalten wird:
- Aufnehmen einer Ankündigung, die durch die mindestens eine lokale Vorrichtung über das lokale Netzwerk rundgesendet wurde; und
- Übertragen eines Sondierungssignals über das lokale Netzwerk und Empfangen eines Signals als Antwort auf das Sondierungssignal von der mindestens einen lokalen Vorrichtung.

5. Verfahren nach einem oder mehreren der vorhergehenden Ansprüche, das ferner Aktualisieren der Profilinformationen umfasst, was Erhalten einer neuen Vorrichtungskennung einer neuen lokalen Vorrichtung umfasst.

6. Verfahren nach einem oder mehreren der vorhergehenden Ansprüche, das ferner Folgendes umfasst:
- Speichern einer Liste, die eine Vielzahl von Benutzergeräten umfasst, wobei die Vielzahl das Benutzergerät umfasst;
- Übertragen von Profilinformationen für die Vielzahl von Benutzergeräten, wodurch die Vielzahl von Benutzergeräten befähigt wird zum Präsentieren jeweiliger virtueller Repräsentationen der lokalen Vorrichtung in dem lokalen Netzwerk.

7. Zwischenvorrichtung (4) zum Kommunizieren zwischen mindestens einer lokalen Vorrichtung (LD1-LD3), verbunden mit einem lokalen Netzwerk (2), und einem Benutzergerät (UE1), verbunden mit einem öffentlichen Mobilfunknetz (6), über die Zwischenvorrichtung, wobei die Zwischenvorrichtung Folgendes umfasst:
- eine Lokales-Netzwerk-Schnittstelle, ausgelegt zum Verbinden mit dem lokalen Netzwerk;
- eine Öffentliches-Mobilfunknetz-Schnittstelle, ausgelegt zum Verbinden mit dem öffentlichen Mobilfunknetz;
- ein Speicherungsmittel, ausgelegt zum Speichern einer Vorrichtungskennung der mindestens einen lokalen Vorrichtung in dem lokalen Netzwerk, die über die Lokales-Netzwerk-Schnittstelle empfangen wird;
- ein Verarbeitungsmittel, ausgelegt zum Präparieren von Profilinformationen zur Übertragung für das Benutzergerät über das öffentliche Mobilfunknetz, wodurch das Benutzergerät befähigt wird, eine virtuelle Repräsentation der lokalen Vorrichtung, basierend auf den Profilinformationen, zu präsentieren, wobei die Profilinformationen die Vorrichtungskennung umfassen; und
wobei die Zwischenvorrichtung ferner ausgelegt ist zum Empfangen eines Zustands, der einen Status der mindestens einen lokalen Vorrichtung angibt, über das lokale Netzwerk und zum Übertragen des Zustands über das öffentliche Mobilfunknetz für das Benutzergerät;
**dadurch gekennzeichnet, dass** die Profilinformationen für das Benutzergerät an eine Registratur (10) in dem öffentlichen Mobilfunknetz übertragen werden, wobei die Registratur die Profilinformationen zwischenspeichert und an das Benutzergerät überträgt, wobei die Profilinformationen ferner eine Adresse und/oder eine Kennung der Zwischenvorrichtung umfassen, und wobei der Zustand an die Registratur in dem öffentlichen Mobilfunknetz übertragen wird, wobei die Registratur den Zustand zwischenspeichert und an das Benutzergerät überträgt.

8. Zwischenvorrichtung nach dem vorhergehenden Anspruch, ferner ausgelegt zum:
- Vergleichen des empfangenen Zustands mit einem Referenzzustand;
- Übertragen des Zustands über das öffentliche Mobilfunknetz für das Benutzergerät, basierend auf dem Vergleich zwischen dem Zustand und dem Referenzzustand.

9. Zwischenvorrichtung nach einem oder mehreren der vorhergehenden Ansprüche 7-8, ferner umfassend:
- ein Speichermittel zum Speichern einer Adresse der mindestens einen lokalen Vorrichtung in dem lokalen Netzwerk;
- ein Verarbeitungsmittel, ausgelegt zum Verarbeiten eines über die Öffentliches-Mobilfunknetz-Schnittstelle von dem Benutzergerät empfangenen Steuersignals für die mindestens eine lokale Vorrichtung, die mit der Vorrichtungskennung assoziiert ist;
- wobei das Verarbeitungsmittel ferner ausgelegt ist zum Übertragen, über das lokale Netzwerk, des Steuersignals oder einer Ableitung davon an die Adresse der lokalen Vorrichtung, die mit der Vorrichtungskennung assoziiert ist.

10. Zwischenvorrichtung nach einem oder mehreren der vorhergehenden Ansprüche 7-9, ferner ausgelegt zum Erhalten der Vorrichtungskennung und/oder der Adresse und/oder des Zustands durch mindestens eines der Folgenden:
- Aufnehmen einer Ankündigung, die durch die mindestens eine lokale Vorrichtung über das lokale Netzwerk rundgesendet wurde; und
- Senden eines Sondierungssignals über das lokale Netzwerk und Empfangen eines Signals als Antwort auf das Sondierungssignal von der mindestens einen Vorrichtung.

11. Zwischenvorrichtung nach einem oder mehreren der vorhergehenden Ansprüche 7-10, ferner ausgelegt zum Aktualisieren der Profilinformationen durch Erhalten einer Vorrichtungskennung einer neuen lokalen Vorrichtung.

12. Zwischenvorrichtung nach einem oder mehreren der vorhergehenden Ansprüche 7-11, wobei
- das Speicherungsmittel ferner ausgelegt ist zum Speichern einer Liste, die eine Vielzahl von Benutzergeräten umfasst;
- das Verarbeitungsmittel ferner ausgelegt ist zum Übertragen von Profilinformationen für die Vielzahl von Benutzergeräten, wodurch die Vielzahl von Benutzergeräten befähigt wird zum Präsentieren jeweiliger virtueller Repräsentationen der lokalen Vorrichtung in dem lokalen Netzwerk.

13. Benutzergerät (UE1) zum Kommunizieren zwischen mindestens einer lokalen Vorrichtung (LD1-LD3), verbunden mit einem lokalen Netzwerk (2), und dem Benutzergerät, verbunden mit einem öffentlichen Mobilfunknetz (6), über eine Zwischenvorrichtung (4), die mit dem lokalen Netzwerk und dem öffentlichen Mobilfunknetz verbunden ist, wobei das Benutzergerät einen Prozessor umfasst, der ausgelegt ist zum:
- Empfangen von Profilinformationen von der Zwischenvorrichtung über das öffentliche Mobilfunknetz, wobei die Profilinformationen eine Vorrichtungskennung der mindestens einen lokalen Vorrichtung in dem lokalen Netzwerk umfassen und ausgelegt sind zum Präsentieren einer virtuellen Repräsentation der lokalen Vorrichtung, basierend auf den Profilinformationen;
- Empfangen eines Zustands und zum Angeben eines Status der mindestens einen lokalen Vorrichtung in der virtuellen Repräsentation, die auf dem empfangenen Zustand basiert;
**dadurch gekennzeichnet, dass** die Profilinformationen für das Benutzergerät von einer Registratur (10) in dem öffentlichen Mobilfunknetz empfangen werden, wobei die Registratur die Profilinformationen zwischenspeichert und an das Benutzergerät überträgt, wobei die Profilinformationen ferner eine Adresse und/oder eine Kennung der Zwischenvorrichtung umfassen, und wobei der Zustand von der Registratur in dem öffentlichen Mobilfunknetz empfangen wird, wobei die Registratur den Zustand zwischenspeichert und an das Benutzergerät überträgt.

14. Benutzergerät nach Anspruch 13, das ferner Folgendes umfasst:
- ein Interaktionsmittel, ausgelegt zum Ermöglichen von Interaktion mit der virtuellen Repräsentation der lokalen Vorrichtung in dem lokalen Netzwerk durch Übertragen, über das öffentliche Mobilfunknetz an die Zwischenvorrichtung, eines Steuersignals für die mindestens eine Vorrichtung, die mit der Vorrichtungskennung assoziiert ist.

15. Benutzergerät nach einem oder mehreren der vorhergehenden Ansprüche 13-14, ferner ausgelegt zum Empfangen von weiteren Profilinformationen über das öffentliche Mobilfunknetz von einer weiteren Zwischenvorrichtung, die mit einem weiteren lokalen Netzwerk und mit dem öffentlichen Mobilfunknetz verbunden ist, wobei die weiteren Profilinformationen eine weitere Vorrichtungskennung von mindestens einer weiteren lokalen Vorrichtung, die mit dem weiteren lokalen Netzwerk verbunden ist, umfasst und ausgelegt ist zum Präsentieren einer weiteren virtuellen Repräsentation der weiteren lokalen Vorrichtung, basierend auf den weiteren Profilinformationen,
wobei die virtuelle Repräsentation und die weitere virtuelle Repräsentation als Mitglieder einer Gruppe präsentiert werden.

16. Computerprogramm oder Suite von Computerprogrammen, umfassend mindestens einen Softwarecodeanteil oder ein Computerprogrammprodukt, das mindestens einen Softwarecodeanteil speichert, wobei der Softwarecodeanteil, wenn dieser auf einem Computersystem läuft, dafür ausgelegt ist, das Verfahren nach einem oder mehreren der vorhergehenden Ansprüche 1-6 auszuführen.

## Revendications

1. Procédé permettant la communication entre au moins un dispositif local (LD1-LD3) connecté à un réseau local (2) et un équipement utilisateur (UE1) connecté à un réseau mobile public (6), par l'intermédiaire d'un dispositif intermédiaire (4) configuré pour se connecter au réseau local et au réseau mobile public, le procédé comprenant dans le dispositif intermédiaire les étapes de:
- connexion au réseau local et mémorisation d'un identifiant de dispositif de l'au moins un dispositif local dans le réseau local ;
- connexion au réseau mobile public et transmission d'informations de profil à l'équipement utilisateur par l'intermédiaire du réseau mobile public, permettant à l'équipement utilisateur de présenter une représentation virtuelle de l'au moins un dispositif local en fonction des informations de profil, les informations de profil comprenant l'identifiant de dispositif ;
- réception d'un état indiquant un état de l'au moins un dispositif local sur le réseau local ;
- transmission de l'état à l'équipement utilisateur sur le réseau mobile public ;
**caractérisé en ce que** les informations de profil destinées à l'équipement utilisateur sont transmises à un registre (10) dans le réseau mobile public, le registre mettant en cache et transmettant les informations de profil à l'équipement utilisateur, les informations de profil comprenant en outre une adresse et/ou un identifiant du dispositif intermédiaire, et l'état étant transmis au registre dans le réseau mobile public, le registre mettant en cache et transmettant l'état à l'équipement utilisateur.

2. Procédé selon la revendication 1, comprenant en outre :
- la comparaison de l'état reçu à un état de référence ;
- la transmission de l'état à l'équipement utilisateur sur le réseau mobile public en fonction de la comparaison entre l'état et l'état de référence.

3. Procédé selon une ou plusieurs des revendications précédentes, comprenant en outre :
- la mémorisation d'une adresse de l'au moins un dispositif local dans le réseau local ;
- la réception par l'intermédiaire du réseau mobile public de l'équipement utilisateur d'un signal de commande de l'au moins un dispositif associé à l'identifiant de dispositif ;
- la transmission par l'intermédiaire du réseau local du signal de commande à l'adresse du dispositif local associé à l'identifiant de dispositif.

4. Procédé selon une ou plusieurs des revendications précédentes, dans lequel l'identifiant de dispositif et/ou une adresse du dispositif local dans le réseau local et/ou l'état du dispositif local sont obtenus en :
- capturant une annonce, diffusée par l'au moins un dispositif local sur le réseau local ; et/ou
- transmettant un signal de sondage sur le réseau local et recevant un signal en réponse au signal de sondage à partir de l'au moins un dispositif local.

5. Procédé selon une ou plusieurs des revendications précédentes, comprenant en outre la mise à jour des informations de profil comprenant l'obtention d'un nouvel identifiant de dispositif d'un nouveau dispositif local.

6. Procédé selon une ou plusieurs des revendications précédentes, comprenant en outre :
- la mémorisation d'une liste comprenant une pluralité d'équipements utilisateurs, la pluralité comprenant l'équipement utilisateur ;
- la transmission d'informations de profil à la pluralité d'équipements utilisateurs permettant à la pluralité d'équipements utilisateurs de présenter des représentations virtuelles respectives du dispositif local dans le réseau local.

7. Dispositif intermédiaire (4) permettant la communication entre au moins un dispositif local (LD1-LD3) connecté à un réseau local (2) et un équipement utilisateur (UE1) connecté à un réseau mobile public (6), par l'intermédiaire du dispositif intermédiaire, le dispositif intermédiaire comprenant :
- une interface réseau locale configurée pour se connecter au réseau local ;
- une interface réseau publique configurée pour se connecter au réseau mobile public ;
- des moyens de mémorisation configurés pour mémoriser un identifiant de dispositif, reçu sur l'interface réseau locale, de l'au moins un dispositif local dans le réseau local ;
- des moyens de traitement configurés pour préparer des informations de profil en vue de leur transmission à l'équipement utilisateur par l'intermédiaire du réseau mobile public, permettant à l'équipement utilisateur de présenter une représentation virtuelle du dispositif local en fonction des informations de profil, les informations de profil comprenant l'identifiant de dispositif, et
dans lequel le dispositif intermédiaire est en outre configuré pour recevoir un état indiquant un état de l'au moins un dispositif local sur le réseau local, et transmettre l'état à l'équipement utilisateur sur le réseau mobile public ;
**caractérisé en ce que** les informations de profil destinées à l'équipement utilisateur sont transmises à un registre (10) dans le réseau mobile public, le registre mettant en cache et transmettant les informations de profil à l'équipement utilisateur, les informations de profil comprenant en outre une adresse et/ou un identifiant du dispositif intermédiaire, et l'état étant transmis au registre dans le réseau mobile public, le registre mettant en cache et transmettant l'état à l'équipement utilisateur.

8. Dispositif intermédiaire selon la revendication précédente, configuré en outre pour :
- comparer l'état reçu à un état de référence ;
- transmettre l'état à l'équipement utilisateur sur le réseau mobile public en fonction de la comparaison entre l'état et l'état de référence.

9. Dispositif intermédiaire selon une ou plusieurs des revendications précédentes 7-8, comprenant :
- des moyens de mémorisation configurés pour mémoriser une adresse de l'au moins un dispositif local dans le réseau local ;
- des moyens de traitement configurés pour traiter un signal de commande reçu par l'intermédiaire de l'interface de réseau public à partir de l'équipement utilisateur pour l'au moins un dispositif local associé à l'identifiant de dispositif ;
- dans lequel les moyens de traitement sont configuré en outre pour transmettre le signal de commande, ou un dérivé de celui-ci, par l'intermédiaire de l'interface réseau locale à l'adresse du dispositif local associé à l'identifiant de dispositif.

10. Dispositif intermédiaire selon une ou plusieurs des revendications 7 à 9 précédentes, configuré en outre pour obtenir l'identifiant de dispositif, et/ou l'adresse et/ou l'état en :
- capturant une annonce, diffusée par l'au moins un dispositif local sur le réseau local ; et/ou
- envoyant un signal de sondage sur le réseau local et recevant un signal en réponse au signal de sondage à partir de l'au moins un dispositif.

11. Dispositif intermédiaire selon une ou plusieurs des revendications 7 à 10 précédentes, configuré en outre pour mettre à jour les informations de profil en obtenant un identifiant de dispositif d'un nouveau dispositif local.

12. Dispositif intermédiaire selon une ou plusieurs des revendications 7 à 11 précédentes, dans lequel
- les moyens de mémorisation sont configurés en outre pour mémoriser une liste comprenant une pluralité d'équipements utilisateurs ;
- les moyens de traitement sont configurés en outre pour transmettre des informations de profil à la pluralité d'équipements utilisateurs permettant à la pluralité d'équipements utilisateurs de présenter des représentations virtuelles respectives du dispositif local dans le réseau local.

13. Equipement utilisateur (UE1) permettant la communication entre au moins un dispositif local (LD1-LD3) connecté à un réseau local (2) et l'équipement utilisateur connecté à un réseau mobile public (6), par l'intermédiaire d'un dispositif intermédiaire (4) connecté au réseau local et au réseau mobile public, l'équipement utilisateur comprenant un processeur configuré pour :
- recevoir des informations de profil à partir du dispositif intermédiaire par l'intermédiaire du réseau mobile public, les informations de profil comprenant un identifiant de dispositif de l'au moins un dispositif local dans le réseau local et configuré pour présenter une représentation virtuelle du dispositif local en fonction des informations de profil ;
- recevoir un état et indiquer un état de l'au moins un dispositif local dans la représentation virtuelle en fonction de l'état reçu ;
**caractérisé en ce que** les informations de profil destinées à l'équipement utilisateur sont reçues à partir d'un registre (10) dans le réseau mobile public, le registre mettant en cache et transmettant les informations de profil à l'équipement utilisateur, les informations de profil comprenant en outre une adresse et/ou un identifiant du dispositif intermédiaire, et l'état étant reçu à partir du registre dans le réseau mobile public, le registre mettant en cache et transmettant l'état à l'équipement utilisateur.

14. Equipement utilisateur selon la revendication 13, comprenant en outre :
- des moyens d'interaction configurés pour permettre une interaction avec la représentation virtuelle du dispositif local dans le réseau local en transmettant par l'intermédiaire du réseau mobile public au dispositif intermédiaire un signal de commande de l'au moins un dispositif associé à l'identifiant de dispositif.

15. Equipement utilisateur selon une ou plusieurs des revendications 13-14 précédentes, configuré en outre pour recevoir d'autres informations de profil sur le réseau mobile public à partir d'un autre dispositif intermédiaire connecté à un autre réseau local et au réseau mobile public, les autres informations de profil comprenant un autre identifiant de dispositif de l'au moins un autre dispositif local connecté à l'autre réseau local, et configuré pour présenter une autre représentation virtuelle de l'autre dispositif local en fonction des autres informations de profil,
dans lequel la représentation virtuelle et l'autre représentation virtuelle sont présentées en tant que membres d'un groupe.

16. Programme informatique ou suite de programmes informatiques comprenant au moins une partie de code logiciel ou un produit-programme informatique mémorisant au moins une partie de code logiciel, la partie de code logiciel, à son exécution sur un système informatique, étant configurée pour exécuter le procédé selon une ou plusieurs des revendications précédentes 1 à 6.
